(19) Europäisches Patentamt
European Patent Office
Office européen des brevets

(11) Veröffentlichungsnummer: **0 081 777**
**B1**

# (12) EUROPÄISCHE PATENTSCHRIFT

(45) Veröffentlichungstag der Patentschrift: **09.04.86**

(21) Anmeldenummer: **82111241.4**

(22) Anmeldetag: **04.12.82**

(51) Int. Cl.⁴: **C 08 F 14/06**, C 08 F 2/16, C 08 F 2/00, C 23 F 15/00

## (54) Verfahren zur Herstellung von Vinylchlorid-Polymerisaten.

(30) Priorität: **12.12.81 DE 3149320**

(43) Veröffentlichungstag der Anmeldung: **22.06.83 Patentblatt 83/25**

(45) Bekanntmachung des Hinweises auf die Patenterteilung: **09.04.86 Patentblatt 86/15**

(84) Benannte Vertragsstaaten: **BE DE FR GB IT NL**

(56) Entgegenhaltungen:
**EP-A-0 019 198**
**DD-A-118 287**

(73) Patentinhaber: **HOECHST AKTIENGESELLSCHAFT, Postfach 80 03 20, D-6230 Frankfurt am Main 80 (DE)**

(72) Erfinder: **Eberl, Karl, Dr., Kanalstrasse 3, D-8261 Burgkirchen/Alz (DE)**
Erfinder: **Engelmann, Manfred, Dr., Baader Strasse 2a, D-8263 Burghausen/Salzach (DE)**
Erfinder: **Fischer, Edgar, Dr., Assmannshäuser Weg 8, D-6000 Frankfurt am Main 71 (DE)**

**EP 0 081 777 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft ein Verfahren gemäß Patentanspruch 1.

Bei der Herstellung von Vinylchlorid-Polymerisaten durch Polymerisation in wäßriger Suspension bilden sich im Verlauf der Polymerisation an der Innenwand der Apparatur, in der die Polymerisation stattfindet, sowie an den Einbauten wie Rührer, Stromstörer etc. Polymerisatbeläge. Durch diese Beläge wird die Polymerisatausbeute vermindert und die Qualität des erzeugten Produktes verschlechtert, da diese Beläge teilweise abfallen und in das Endprodukt gelangen, wo die gröberen Partikel zu Verstopfungen der Abflußleitungen führen können, die feineren Partikel bei der Aufarbeitung zum trockenen Polymerisat mitgeführt werden und in diesem dann bei der Weiterverarbeitung zu Stippen oder "Fischaugen" führen. Die Wandbeläge in der Apparatur behindern außerdem die Abfuhr der Polymerisationswärme durch diese Wände, wodurch unwirtschaftliche lange Reaktionszeiten in Kauf genommen werden müssen.

Die Entfernung derartiger Beläge ist unumgänglich, was üblicherweise auf mechanischem Wege geschieht. Hierfür werden zumeist Druckwasser-Ausspritzgeräte verwendet, die jedoch nur die leichthaftenden Wandabscheidungen entfernen. Daher muß die Polymerisationsapparatur jeweils nach wenigen Ansätzen unter aufwendigen Sicherheitsvorkehrungen bestiegen und zusätzlich von Hand mechanisch gereinigt werden. Diese Reinigungsarbeiten sind kostspielig, verursachen längere Stillstandszeiten und vermindern damit die Wirtschaftlichkeit des Verfahrens beträchtlich.

Es hat daher nicht an Versuchen gefehlt, derartige Polymerisatbeläge bei der Herstellung von Vinylchlorid-Polymerisaten in wäßriger Dispersion zu vermindern oder möglichst ganz zu vermeiden.

So ist es beispielsweise bekannt, die Wände der Polymerisationsapparatur mit einem entsprechend ausgebildeten Rührer abzustreifen oder die Wandtemperatur auf bestimmte Beträge einzuregulieren. In neuerer Zeit ist eine Vielzahl von Verfahren bekannt geworden, die teils durch Zusätze zur Polymerisationsmischung, teils durch besondere Beschichtung der Oberflächen in der Polymerisationsapparatur Wandbeläge vermindern beziehungsweise vermeiden sollen. Schon die Vielzahl der in relativ kurzer Zeit entwickelten Verfahren zeigt, daß es offenbar schwierig ist, eine optimale Lösung zu finden. Generell haben alle Verfahren, die mit Zusätzen zur Polymerisationsmischung arbeiten, den Nachteil, daß diese Zusätze den Polymerisationsablauf beeinflussen können und außerdem in mehr oder weniger großen Mengen im Polymerisat verbleiben, wodurch dessen physiologische Unbedenklichkeit sowie auch das Verarbeitungsverhalten ungünstig beeinflußt werden kann. Wandbeschichtungen weisen diese Nachteile im allgemeinen weniger oder überhaupt nicht auf.

Aus der DD-A 118 287 ist ein Verfahren zur Behandlung von Innenwänden von Polymerisationsreaktoren und Polymerisations-Nachfolgeeinrichtungen bekannt, die für die Polymerisation von Vinylchlorid verwendet werden, wobei die Innenwände mit einem modifizierten Siliconharzsystem beschichtet werden. Die Beschichtung besteht aus a) 25 bis 100 Gew.-Teilen eines verzweigten Methyl- bzw. Methylphenylpolysilixans mit einem mittleren Molekulargewicht von 300 bis 5000, einem Si-gebundenen Hydroxylgruppen-Gehalt von 0,05 bis 2 Gew.-% und einem Methoxygruppen-Gehalt von 0,1 bis 10 Gew.-%, welches gegebenenfalls mit 0 bis 75 Gew.-Teilen eines Harzes, wie Alkyd-, Epoxid-Harz und andere, abgemischt wird, gelöst in einer Menge von 50 bis 500 Gew.-Teilen eines organischen Lösungsmittels, und/oder eines ankondensierten Halogensiloxans und/oder Alkoxysilans bzw. -gemisches, gelöst in einer Menge von 100 bis 5000 Gew.-Teilen eines organischen Lösungsmittels,

b) 0 bis 35 Gew.-Teilen Methyl- oder Methylphenylsiliconöl mit einer Viskosität von 2000 bis 7000 cSt $2.10^{-3}$ bis $7.10^{-3}$ $m^2$ $sec^{-1}$ und einem Si-gebundenen Hydroxylgruppen-Gehalt von 0,5 bis 10 Gew.-% und gegebenenfalls

c) 0,01 bis 5 Gew.-Teilen einer die Vernetzung katalysierenden Kombination Kieselsäureester/Amin, wie z.B. Ethylorthosilicat zusammen mit Di- oder Triethanolamin im äquivalenten Verhältnis, oder Kieselsäureester/organische Zinnverbindung, wie z. B. Ethylorthosilicat zusammen mit Dibutylzinnacetat im äquivalenten Verhältnis. Diesen Beschichtungsmaterialien können Inhibitoren auf der Basis von Antrachinonfarbstoffen zugesetzt werden.

Wie ein Vergleich der Beispiele 24 und 25 der genannten Schrift mit den entsprechenden Beispielen 11, 12, 14 und 15 zeigt, wird beim Zusatz einer Antrachinon-Inhibitor-Verbindung keine wesentliche Verbesserung erzielt. Dagegen bringt das erfindungsgemäße Verfahren eine deutliche nach den in der DD-PS 118 287 dargestellten Ergebnissen nicht zu erwartende Verbesserung.

Es sind ferner aus den Schriften DE-A 29 19 197 und DE-A 29 19 258 zwei Verfahren bekannt, bei denen Vinylchlorid in einer Apparatur polymerisiert wird, deren Innenwände einen Überzug enthalten, der ganz oder teilweise aus einer Gruppe von Derivaten des Phenthiazins bzw. des Phenoxazins besteht. Mit diesen Verfahren werden zwar anfänglich nur geringe Wandbeläge erzielt. Bei längerem Gebrauch, insbesondere wenn mehrere Polymerisationsansätze hintereinander in der gleichen Apparatur durchgeführt werden, läßt jedoch die belagsverhindernde Wirkung bald nach, so daß das erfindungsgemäße Verfahren nun deutlich überlegen ist, wie nachfolgende Vergleichsversuche zeigen.

Der vorliegenden Erfindung liegt die Aufgabe zugrunde, ein Verfahren bereitzustellen, das die Nachteile der bekannten Verfahren zur Verhinderung von Wandbelägen bei der Polymerisation von Vinylchlorid nicht oder nur in geringerem Maße aufweist.

Dieses neue Verfahren zur Herstellung von Vinylchlorid-Homo-, -Co- oder -Pfropfpolymerisaten, die mindestens 50 Gew.-%, bezogen auf das Polymere, polymerisierte Vinylchlorid-Einheiten enthalten, durch Polymerisation von Vinylchlorid, gegebenenfalls in Mischung mit Monomeren, die mit Vinylchlorid copolymerisierbar sind, und/oder Polymeren, die mit Vinylchlorid pfropfpolymerisierbar sind, in wäßriger

Dispersion in Gegenwart von radikalbildenden Katalysatoren, gegebenenfalls Suspensionsstabilisatoren, Emulgatoren und Polymerisationshilfsstoffen in einer Apparatur, deren Oberflächen, die mit der Polymerisationsmischung oder nur den Monomeren in Berührung kommen können, mit einem Überzug versehen sind, ist dadurch gekennzeichnet, daß dieser Überzug ganz oder teilweise aus einem Reaktionsprodukt besteht, das erhalten wird bei -20 bis 200 °C, in Gegenwart oder Abwesenheit eines aprotischen Lösungsmittels durch Umsetzung von

a) mindestens einer Verbindung der allgemeinen Formel

$$R^{I}_{n}-Si-Z_{(4-n)} \qquad (I),$$

worin bedeuten

$R^I$ = einen Kohlenwasserstoffrest mit 1 bis 8 C-Atomen, der gegebenenfalls einen oder mehrere der folgenden Substituenten trägt:

F, Cl, Br, -SH, $NH_2$ und/oder, wenn mehr als 1 oder 2 C-Atome vorhanden sind, in dessen Kohlenstoffkette Heteroatome wie folgt eingebaut sein können:

(C)-0-(C); 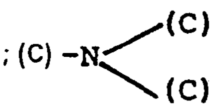 ;

mit der Maßgabe, daß der Rest $R^I$ keine -SHoder $-NH_2$-Gruppen enthält, wenn Z = Cl und/oder Br ist;

Z = Cl; Br; $-0-R_1$, wobei $R_1$ einen Alkylrest mit 1 bis 4 C-Atomen bedeutet; $-OCOR_2$, wobei $R_2$ die Bedeutung von $R_1$ hat;

n = 0 oder 1, wobei Z gleich oder verschieden sein kann, und

b) mindestens einem Inhibitor für radikalisch verlaufende Polymerisationen, der im Molekül mindestens einen aromatischen Ring oder mindestens einen chinoiden Ring und mindestens ein Wasserstoffatom enthält, das mit einem Sauerstoff-, Schwefel- oder Stickstoffatom verbunden ist, dann Abtrennung der überschüssigen Verbindung a) und gegebenenfalls des Lösungsmittels, anschließend Umsetzung des Reaktionsproduktes aus den genannten Verbindungen a) und b) mit Wasser bei 10 bis 100 °C, gegebenenfalls unter erhöhtem Druck in Gegenwart oder Abwesenheit eines mit Wasser wenigstens teilweise mischbaren Lösungsmittels und/oder eines für die Hydrolyse von Silicium-Verbindungen bekannten Katalysators, und nachfolgend Behandlung des Hydrolyseproduktes bei 40 bis 200 °C, in Gegenwart oder Abwesenheit eines für die Vernetzung hydrolisierter Siliciumverbindungen bekannten Katalysators.

Die Erfindung betrifft ferner Mittel zur Beschichtung der Innenteile von Apparaturen für die Polymerisation zur Unterdrückung der Bildung von Wandbelägen, dadurch gekennzeichnet, daß das Mittel mindestens ein Reaktionsprodukt enthält, welches wie vorstehend beschrieben, durch Umsetzung von mindestens einer Verbindung a) mit mindestens einem Inhibitor b) hergestellt wurde.

Weiterhin betrifft die Erfindung eine Polymerisationsapparatur, deren Innenwände und Einbauten mit einem Überzug versehen sind, der ganz oder teilweise aus einem Reaktionsprodukt besteht, das, wie vorstehend beschrieben, durch Umsetzung von mindestens einer Verbindung a) mit mindestens einem Inhibitor b) hergestellt wurde.

Einige typische Vertreter der Verbindungen a) sind: Siliciumtetrachlorid; Siliciumtetrabromid; Methyltrichlorsilan; Methyltribromsilan; Ethyltrichlorsilan; Ethyltribromsilan; Phenyltrichlorsilan; Vinyltrichlorsilan; Tetramethoxysilan; Tetraethoxysilan; Methyltrimethoxysilan; Methyltriethoxysilan; Ethyltrimethoxysilan; Ethyltriethoxysilan; Phenyltrimethoxysilan; Phenyltriethoxysilan; Vinyltrimethoxysilan; 3-Amino-propyl(1)-trimethoxysilan; 3-Chlorpropyl(1)-trichlor-silan; 3-Chlorpropyl(1)-trimethoxysilan; 3-Mercaptopropyl(1)-trimethoxysilan; Methyl-triacetoxysilan; Ethyl-triacetoxysilan und Vinyl-triacetoxysilan.

Besonders wirksame Überzüge werden erhalten, wenn für die Reaktion mindestens eine Verbindung a) mit der Formel (I) eingesetzt wird, in der bedeuten:

$R^I_n$ = einen Kohlenwasserstoffrest mit 1 bis 6 C-Atomen,

Z = Cl oder Br und

n = 0 oder 1.

Als Reaktionspartner b) wird mindestens ein Inhibitor für radikalisch verlaufende Polymerisationen eingesetzt, der im Molekül mindestens einen aromatischen Ring oder mindestens einen chinoiden Ring und mindestens ein

Wasserstoffatom enthält, das mit einem Sauerstoff-, Schwefel- oder Stickstoffatom verbunden ist. Es können im Molekül mehrere aromatische Ringe sowie auch mehrere chinoide Ringe vorliegen, wobei in einem Molekül auch ein oder mehrere aromatische Ringe und ein oder mehrere chinoide Ringe gemeinsam vorkommen können. Die aromatischen wie auch die chinoiden Ringe können sowohl in sich abgeschlossen als auch annelliert (wie z.B. im Naphthalin oder Naphtochinon) im Molekül vorkommen.

Die Verbindung b) kann mehrere Wasserstoffatome enthalten, die mit einem Sauerstoff-, Schwefel- oder Stickstoffatom verbunden sind. Das jeweilige Sauerstoff-, Schwefel- oder Stickstoffatom kann seinerseits Substituent an einem aromatischen oder chinoiden Ring sein oder mit einem aliphatischen Kohlenstoffatom verbunden sein.

Vorteilhaft wird als Inhibitor b) mindestens eine Verbindung folgender allgemeiner Formel verwendet:

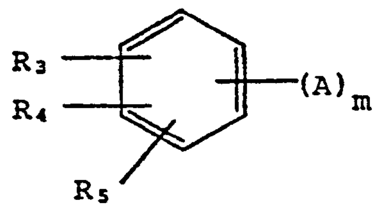

(II),

in der entweder $R_3$, $R_4$, $R_5$ bedeuten:

H; oder $-O-R_6$, worin $R_6$ ein Alkylrest mit 1 bis 4 C-Atomen ist, oder einen Alkylrest mit 1 bis 4 C-Atomen oder einen Benzylrest, der gegebenenfalls einen oder mehrere -OH-, $R_6$-, oder $-O-R_6$-Substituenten trägt, wobei die Reste $R_3$, $R_4$ und $R_5$ gleich oder voneinander verschieden sein können;

oder $R_3$ hat die oben angegebene Bedeutung und

$R_4$ und $R_5$ haben die Bedeutung

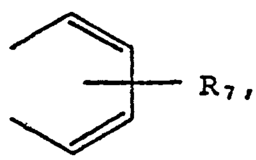

worin $R_7$ = H; -OH; $-R_6$; $-OR_6$ bedeuten, worin $R_6$ ein Alkylrest mit 1 bis 4 C-Atomen ist,

A bedeutet -OH oder $-NHR_8$, worin $R_8$ = H oder $-COCH_3$ oder ein Alkylrest mit 1 bis 4 C-Atomen oder ein Phenylrest ist und in der

m die Zahl 2 oder 3 bedeutet.

Einige typische Vertreter der vorstehend genannten, vorzugsweise als Inhibitor b) eingesetzten Verbindungen sind: Hydrochinon; Chlor-hydrochinon; 2,5-Dichlor-hydrochinon; Tetrachlor-hydrochinon; Hydroxyhydrochinon; 2,5-Dimethylhydrochinon; 2,5-Dihydroxy-1-methyl-4-iso-propylbenzol; Brenzkatechin; 4-Chlorbrenzkatechin; 4-Methyl-brenzkatechin; 3,4-Dihydroxy-1-propenylbenzol; 4-tert.-Butyl-brenzkatechin; 4'Hydroxybenzyl-phenol(4); 4'-Hydroxybenzyl-α-dimethyl-phenol(4); Pyrogallol; 1,2-Dihydroxynaphthalin, 1,4-Dihydroxy-naphthalin; 1,2-Diaminobenzol; 1,4-Diamino-benzol; 1,4-Diaminobenzol-N-monoacetat; 1,4-Diaminobenzol-NN'-diacetat; 2,3-Diaminotoluol; 2,5-Diamino-toluol; 3,4-Diaminotoluol; 4-Chlor-1,2-diaminobenzol; N-Methyl-1,4-diaminobenzol; N-Ethyl-1,4-diaminobenzol und N-Phenyl-1,4-diaminobenzol.

Besonders bevorzugt werden als Inhibitor b) eine oder mehrere Verbindungen folgender allgemeiner Formel eingesetzt:

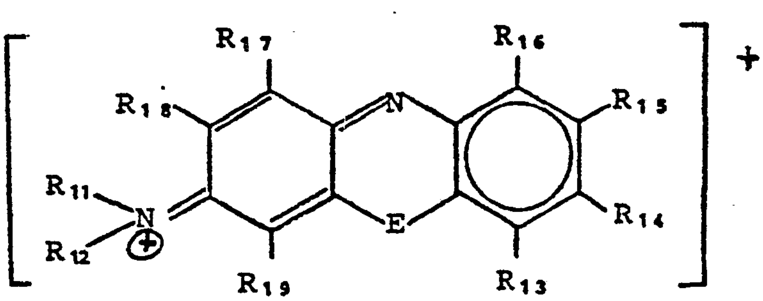

$X^-$ (III),

in der die einzelnen Substituenten folgendes bedeuten:

E = O oder S;

$R_{11}$, $R_{12}$ = H; gesättigter Kohlenwasserstoffrest mit 1 bis 8 C-Atomen,

$R_{13}$, $R_{14}$, $R_{15}$, $R_{16}$ = H; gesättigter Kohlenwasserstoffrest mit 1 bis 8 C-Atomen, OH; O-gesättigter Kohlenwasserstoffrest mit 1 bis 8 C-Atomen:

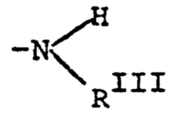 ; 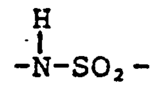

Aromat mit 6 bis 10 C-Atomen,
gegebenenfalls substituiert mit Resten wie $R_{11}/R_{12}$; oder
$R_{15}$ und $R_{16}$ = Aromat mit 6 bis 10 C-Atomen, gegebenenfalls substituiert mit Resten wie $R_{11}/R_{12}$;
wobei jedoch mindestens einer der Reste $R_{13}$ bis $R_{16}$ OH oder

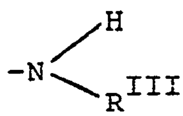

darstellt;

$R^{III}$ $R_{11}/R_{12}$ oder Aromat mit 6 bis 10 Kohlenstoffatomen, gegebenenfalls substituiert durch eine oder mehrere der nachfolgenden Gruppen, entsprechend $R_{11}/R_{12}$, oder O-gesättigter Kohlenwasserstoffrest mit 1 bis 8 C-Atomen oder einer der folgenden Reste:-OH,-COOH,

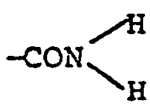, $-SO_3H$; 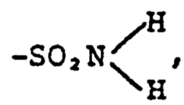, 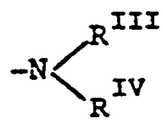

($R^{III}$, $R^{IV}$ = H oder $C_1$-$C_6$-Alkyl)

$R_{17}$, $R_{18}$, $R_{19}$ = H, gesättigter Kohlenwasserstoffrest mit 1 bis 8 C-Atomen, vorzugsweise aliphatischer Kohlenwasserstoffrest mit 1 bis 8 C-Atomen, O-gesättigter Kohlenwasserstoffrest mit 1 bis 8 C-Atomen, vorzugsweise O-aliphatischer Kohlenwasserstoffrest mit 1 bis 6 C-Atomen;

X = beliebiges einwertiges Anion oder ein entsprechendes Anionäquivalent.

Einige typische Vertreter der im vorangegangenen Abschnitt beschriebenen Verbindungsklasse sind beschrieben in der DE-A 25 19 157, Tabelle I, auf den Seiten 11 bis 16 und in der DE-A 25 15 258, ebenfalls Tabelle I, auf den Seiten 11 bis 15. Die genannten Tabellen sind gleichzeitig Gegenstand der vorliegenden Beschreibung.

Die Verbindung a) entsprechend der allgemeinen Formel (I) wird mit dem Inhibitor b) bei Temperaturen von -20 bis +200 °C umgesetzt. Hierbei wird vorzugsweise in Gegenwart eines aprotischen Lösungsmittels gearbeitet. Die Umsetzung kann jedoch auch ohne aprotisches Lösungsmittel durchgeführt werden. Bei Temperaturen unter −20 °C wird verschiedentlich eine zu niedrige Reaktionsgeschwindigkeit beobachtet, außerdem wird bei Verwendung eines aprotischen Lösungsmittels die Löslichkeit der Reaktionspartner zu gering und der technische Aufwand für die Einhaltung so niedriger Temperaturen zu hoch. Oberhalb +200 °C werden thermische Zersetzung des Reaktionsproduktes und andere unerwünschte Nebenreaktionen beobachtet, besonders, wenn als Verbindung a) Alkoxysilane eingesetzt werden. Vorzugsweise wird bei Temperaturen von 10 bis 100 °C und insbesondere bei 20 bis 60 °C gearbeit.

Die Anwendung von Drücken, die über oder unter dem normalen Atmosphärendruck liegen, ist im allgemeinen nicht erforderlich. Zweckmäßig wird ein aprotisches Lösungsmittel gewählt, dessen Siedepunkt bei Normaldruck gleich der zu verwendenden Reaktionstemperatur ist oder höher liegt als diese.

Vorzugsweise wird die Umsetzung der Verbindung a) mit dem Inhibitor b) in Gegenwart von 2 bis 200 Gew.-Teilen und insbesondere in Gegenwart von 50 bis 150 Gew.-Teilen, bezogen auf 1 Gew.-Teil des Inhibitors b), eines oder mehrerer aprotischer Lösungsmittel, die bei 40 bis 200 °C sieden, vorgenommen. Geeignete aprotische Lösungsmittel sind beispielsweise: Aceton, Benzol, Toluol, Diethylether, Dibutylether, Methylethylketon, Xylol, Dimethyl-sulfoxid. Bevorzugt werden Aceton und/oder Toluol eingesetzt.

Vorzugsweise werden nach Beendigung der Reaktion das oder die aprotischen Lösungsmittel, gegebenenfalls zusammen mit nichtumgesetzter Verbindung a) aus dem Reaktionsgemisch entfernt. Dies kann beispielsweise durch Abdestillieren, vorzugsweise unter vermindertem Druck,bei Temperaturen von 20 bis etwa 100 °C, mit oder ohne Durchleiten von Inertgasen, wie zum Beispiel Stickstoff, geschehen. Sofern das aprotische Mittel ausreichend mit Wasser mischbar ist (siehe später), beispielsweise Aceton, ist es auch möglich auf die Abtrennung dieses Lösungsmittels zu verzichten, doch ist dies meistens nicht ratsam, da häufig eine

ungünstigere Wirksamkeit der Reaktionsprodukte beobachtet wird, besonders dann, wenn ein größerer Überschuß der Verbindung a) in bezug auf den Inhibitor b) eingesetzt wurde.

Für die Umsetzung werden je Grammatom aktiven Wasserstoffs im Inhibitor b) 0,1 bis 5 mol der Verbindung a) eingesetzt. Unter: "aktivem Wasserstoff im Inhibitor b)" sind solche Wasserstoffatome zu verstehen, die mit Sauerstoff-, Schwefel- oder Stickstoffatomen verbunden sind. Werden weniger als 0,5 mol der Verbindung a) je Gramm aktives Wasserstoffatom im Inhibitor b) verwendet, so läßt die Wirksamkeit der Reaktionsprodukte insbesondere bei längeren Polymerisationszeiten deutlich nach. Wenn mehr als 5 mol der Verbindung a) je Gramm aktives Wasserstoffatom im Inhibitor b) eingesetzt werden, ist ebenfalls ein deutliches Nachlassen der Wirkung der Reaktionsprodukte festzustellen. Vorzugsweise werden 0,25 bis 2 mol der Verbindung a) je Gramm aktives Wasserstoffatom des Inhibitors b) eingesetzt.

Die Reaktion der Verbindung a) mit dem Inhibitor b) erfolgt zweckmäßig in einer trockenen Inertgas-Atmosphäre, beispielsweise in trockenem Stickstoff. Die notwendige Reaktionsdauer hängt von der gewählten Reaktionstemperatur und von der Reaktivität der eingesetzten Reaktionspartner ab. Im allgemeinen genügen Reaktionsdauern von 0,1 bis 5 Stunden. Unter 0,1 Stunden tritt meist nur eine unvollständige Reaktion ein, über 5 Stunden ist die Reaktion in der Regel beendet, so daß eine weitere Verlängerung der Reaktionszeit einen unnötigen Energieverbrauch und Zeitaufwand ohne zusätzliche Wirkung darstellt. Vorzugsweise beträgt die Reaktionsdauer 1 bis 3 Stunden.

Nach erfolgter Umsetzung und Abtrennung der überschüssigen Verbindung a) und gegebenenfalls des aprotischen Lösungsmittels wird das Reaktionsprodukt aus den Verbindungen a) und b) mit Wasser bei 10 bis 100 °C, gegebenenfalls unter erhöhtem Druck in Gegenwart oder Abwesenheit eines mit Wasser wenigstens teilweise mischbaren Lösungsmittels und/oder eines für die Hydrolyse von Siliciumverbindungen bekannten Katalysators umgesetzt. Hierfür werden je 1 Gew.-Teil des Reaktionsproduktes der Verbindungen a) und b) mit 1 bis 1000 vorzugsweise 10 bis 500 Gew.-Teilen Wasser versetzt. Vorteilhaft werden 10 bis 1000 Gew.-Teile und insbesondere 20 bis 200 Gew.-Teile eines mit Wasser wenigstens teilweise mischbaren Lösungsmittels je 1 Gew.-Teil des Reaktionsproduktes aus den Verbindungen a) und b) zugegeben. Das verwendete Lösungsmittel sollte bei 30 bis 120 °C sieden und bei der gewählten Umsetzungstemperatur mit mindestens 10 Gew.-% Wasser, bezogen auf die Lösungsmittel-Wasser-Mischung, mischbar sein. Zweckmäßig wählt man ein Lösungsmittel, dessen Siedepunkt größer oder gleich der gewählten Umsetzungstemperatur mit Wasser ist. Geeignete Lösungsmittel sind beispielsweise Methanol, Ethanol, Aceton oder Dioxan.

Wird die Umsetzung des Reaktionsproduktes aus den Verbindungen a) und b) mit Wasser unterhalb 10 °C durchgeführt, so läuft die Reaktion unnötig langsam ab, es können Viskositätsprobleme auftreten, auch wird ein Nachlassen der Langzeitwirkung des Reaktionsproduktes festgestellt. Temperaturen über 100 °C sind im allgemeinen nicht notwendig und erfordern einen unnötigen zusätzlichen Aufwand, da in Druckapparaturen gearbeitet werden müßte. Außerdem wird die Reaktion mit Wasser schwer beherrschbar, insbesondere, wenn die Verbindung a) Silicium-Chlor- oder Silicium-Brom-Bindungen enthält. Die Reaktion mit Wasser kann zwar unter Überdruck, beispielsweise bis etwa 0,5 MPa und dementsprechend auch über Temperaturen von 100 °C bis etwa 150 °C erfolgen, um eine möglichst vollständige Reaktion mit Wasser zu erreichen, doch ist dies meistens nicht erforderlich. Vorzugsweise wird bei 20 bis 60 °C gearbeitet.

Die Umsetzung des Reaktionsproduktes der Verbindungen a) und b) mit Wasser wird vorteilhaft in Gegenwart von 0,001 bis 0,3 Gew.-%, bezogen auf das Umsetzungsgemisch, von einem für die Hydrolyse von Siliciumverbindungen bekannten Katalysator durchgeführt. Diese Zugabe empfiehlt sich besonders, wenn die Verbindung a) Alkoxygruppen enthält. Unter "Umsetzungsgemisch" ist die Mischung zu verstehen, die das Reaktionsprodukt aus der Verbindung a) mit dem Inhibitor b) zusammen mit Wasser und gegebenenfalls dem vorstehend beschriebenen wassermischbaren Lösungsmittel enthält. Als Katalysatoren können sowohl alkalische Verbindungen, deren einmolare Lösung in Wasser einen pH von mindestens 11 aufweist, beispielsweise Natriumhydroxid oder Kaliumhydroxid, wie auch Säuren verwendet werden. Vorteilhaft wird mindestens einer der folgenden Stoffe eingesetzt: Ameisensäure, Essigsäure, Propionsäure, Salzsäure, Schwefelsäure oder Salpetersäure.

Werden weniger als 0,001 Gew.-% des Katalysators, bezogen auf das Umsetzungsgemisch, verwendet, tritt im allgemeinen keine ausreichende Beschleunigung der Reaktion ein. Wird mehr als 0,3 Gew.-% Katalysator, bezogen auf das Umsetzungsgemisch, verwendet, wird keine zusätzliche Wirkung mehr festgestellt. Vorzugsweise werden 0,01 bis 0,2 Gew.-% Katalysator, bezogen auf das Umsetzungsgemisch, angewendet.

Wenn die Verbindung a) Gruppen enthält, die bei der Umsetzung mit Wasser Säuren, beispielsweise Salzsäure oder Essigsäure, ergeben, ist die Verwendung eines zusätzlichen Hydrolysekatalysators im allgemeinen nicht erforderlich.

Die Dauer der Umsetzung des Reaktionsproduktes aus den Verbindungen a) und b) mit Wasser hängt von der gewählten Reaktionstemperatur ab; sie beträgt 10 bis etwa 200 Minuten, vorzugsweise 30 bis 120 Minuten.

Nach der Umsetzung mit Wasser wird das überschüssige Wasser und, sofern vorhanden, das Lösungsmittel, beispielsweise durch Verdampfen, entfernt und das Hydrolyseprodukt einer Wärmebehandlung bei 40 bis 200 °C in Gegenwart oder Abwesenheit eines für die Vernetzung hydrolysierter Siliciumverbindungen bekannten Katalysators unterzogen. Unterhalb 40 °C wird eine verminderte Haltbarkeit des Überzugs auf den Apparateteilen festgestellt, oberhalb 200 °C treten unerwünschte Nebenreaktionen und thermische Zersetzung des Hydrolyseproduktes ein. Vorzugsweise wird die Wärmebehandlung bei 90 bis 180 °C und insbesondere bei 100 bis 140 °C durchgeführt.

Die Dauer der Wärmebehandlung richtet sich wiederum nach der angewendeten Temperatur und beträgt 0,25

bis 5 Stunden. Unterhalb 0,25 Stunden wird auch bei Anwendung höherer Temperaturen eine abnehmende Haltbarkeit des Überzugs auf den Apparateteilen beobachtet; oberhalb 5 Stunden Wärmebehandlung tritt bei niedrigen Behandlungstemperaturen kein zusätzlicher Effekt mehr auf, eine Fortführung der Behandlung würde unnötig Energie und Zeit verbrauchen. Bei höheren Behandlungstemperaturen treten darüberhinaus unerwünschte Nebenreaktionen auf. Die Wärmebehandlung wird vorzugsweise während 0,5 bis 3 Stunden, insbesondere während 1 bis 2 Stunden durchgeführt. Es kann in normaler atmosphärischer Luft gearbeitet werden.

Als für die Vernetzung hydrolysierter Siliciumverbindungen bekannte Katalysatoren sind beispielsweise folgende Verbindungen geeignet: Bleiverbindungen wie Bleioctoat, Triethanolamin, Tetramethylammoniumhydroxid, Triethylamin, Ammoniumchlorid. Von diesen Katalysatoren werden 0,003 bis 0,3 Gew.-%, bezogen auf das hydrolysierte Reaktionsprodukt der Verbindungen a) und b), verwendet. Unter 0,003 Gew.-% tritt keine ausreichende katalytische Wirkung ein; über 0,3 Gew.-% wird keine zusätzliche Wirkung mehr beobachtet. Vorzugsweise werden 0,05 bis 0,1 Gew.-% eines oder mehrerer für die Vernetzung von hydrolysierten Siliciumverbindungen bekannter Katalysatoren eingesetzt. Die Verwendung solcher Katalysatoren ist nicht in jedem Fall erforderlich. Man verwendet sie bevorzugt, wenn das hydrolysierte Reaktionsprodukt aus einer Verbindung a) gebildet wurde, die Alkoxygruppen enthielt.

Die Entfernung von überschüssigem Wasser und gegebenenfalls Lösungsmittel nach der Hydrolyse und Kondensation des Reaktionsproduktes aus den Verbindungen a) und b) und die anschließende Wärmebehandlung des Hydrolyseproduktes finden vorteilhaft nach dem Auftrag der hydrolysierten Mischung auf die Oberflächen der Polymerisationsapparatur, die mit der Polymerisationsmischung oder den Monomeren allein in Berührung kommen, statt.

Der Auftrag der hydrolysierten Mischung kann nach üblichen Methoden, beispielsweise durch pinseln, Tauchen oder Aufsprühen erfolgen. Für den Auftrag werden Losungen verwendet, die 0,01 bis 1 Gew.-%, vorzugsweise 0,1 bis 0,6 Gew.-%, bezogen auf die Lösung des hydrolysierten Reaktionsproduktes,aus den Verbindungen a) und b) enthalten. Unterhalb 0,01 Gew.-% müssen unnötig große Lösungsmittelmengen eingesetzt werden, oberhalb 1 Gew.-% ist häufig die Löslichkeit des hydrolysierten Reaktionsproduktes nicht ausreichend. Gegebenenfalls müssen nach erfolgter Hydrolyse noch Lösungsmittel, zweckmäßig die gleichen,die bei der Hydrolyse verwendet wurden, zugegeben werden.

Eine Isolierung des hydrolysierten Reaktionsproduktes der Verbindungen a) und b) und Verwendung zu späteren Aufstrichen ist zwar möglich, aber häufig weniger empfehlenswert, insbesondere dann, wenn das Hydrolyseprodukt eine zähe Masse bildet, die sich in Lösungmitteln erst nach längerer Zeit auflöst. Die mit dem Überzug zu versehenden Oberflächen bestehen bevorzugt aus Metallen, wie sie für Polymerisationsapparaturen üblicherweise eingesetzt werden, beispielsweise normaler Kohlenstoffstahl oder legierte Chrom-Nickel-Stähle, wie V2A- oder V4A-Stahl oder andere Metalle, die meist als Plattierung gebräuchlich sind, wie Nickel, Chrom oder Titan.

Die zu beschichtenden Oberflächen sollen sauber und fettfrei sein. Gegebenenfalls muß mit üblichen Entfettungsmitteln, z. B. Aceton-Methylenchlorid-Mischungen, vorbehandelt werden.

Die Rauhigkeit der zu beschichtenden Oberflächen ist innerhalb üblicher Grenzen nicht kritisch. Im allgemeinen ergeben Rauhtiefen von2 bis 20 µm gute Ergebnisse.

Die Stärke des Überzugs auf den Apparateoberflächen beträgt 0,01 bis 3 g Wirksubstanz je $m^2$ beschichtete Fläche, unter 0,01 g pro $m^2$ ist im allgemeinen kein gleichmäßiger Überzug zu erreichen,und es wird über die Fläche eine ungleichmäßige Wirkung festgestellt. Oberhalb 3 g pro $m^2$ wird keine verbessernde Wirkung mehr beobachtet, es wäre ein unnötig hoher Materialaufwand erforderlich. Vorzugsweise hat der Überzug die Stärke von 0,1 bis 1 g pro $m^2$ beschichtete Fläche.

Prinzipiell kann der endgültige Überzug durch mehrfach übereinander angebrachte Beschichtungen erzeugt weiden, in der Regel reicht jedoch eine Beschichtung aus. Besonders bei Sprüh- oder Tauchbeschichtung ist es vorteilhaft, jedoch nicht unbedingt erforderlich, die zu beschichtenden Oberflächen vorher auf 40 bis 50 °C zu erwärmen.

Neben den Innenwänden der Polymerisationsapparatur können sich auch Polymerablagerungen an den sogenannten Einbauten, wie Rührvorrichtungen, Stromstörern (Leitblechen), Einfüllstutzen, Ventilen, Pumpen, Rohrleitungen, Meßinstrumenten und Innenkühlern (Wärmeaustauschern), bilden, die daher gleichfalls ganz oder teilweise mit einem Überzug zu versehen sind. Gleiches gilt auch für Außenkühler, sofern diese mehr oder weniger direkt auf das Polymerisationsgefäß aufgesetzt sind.

Das erfindungsgemäße Verfahren eignet sich für radikalisch initiierte Polymerisationen in wäßriger Dispersion besonders zur Herstellung von Vinylchlorid-Homo-, -Co- oder -Pfropfpolymerisaten, die mindestens 50 Gew.-%, bezogen auf das Polymere, polymerisierte Vinylchlorideinheiten enthalten. Die Polymerisation kann sowohl in wäßriger Suspension wie auch in wäß-riger Emulsion erfolgen, wobei das neue Verfahren vorzugsweise für die Herstellung von Polymeren eingesetzt wird, die 59 bis 85 Gew.-%, bezogen auf das Polymere, polymerisierte Vinylchlorideinheiten enthalten. Es eignet sich insbesondere auch für die Homopolymerisation von Vinylchlorid. Die Polymerisation kann kontinuierlich oder diskontinuierlich (absatzweise oder chargenweise) durchgeführt werden, mit oder ohne Verwendung eines Saatvorpolymerisates.

Bei der Polymerisation wird bei Temperaturen von 35 bis 85 °C, vorzugsweise 45 bis 75 °C, gearbeitet. Der Druck im Polymerisationsgefäß ist zweckmäßig der Sättigungsdampfdruck des Vinylchlorids beziehungsweise der verwendeten Monomerenmischung bei der angewendeten Polymerisationstemperatur, er kann auch etwas über dem Sättigungsdampfdruck liegen. Dies gilt für den Beginn der Polymerisation. In der Regel wird bei Drücken

von 0,5 bis etwa 1,5 MPa gearbeitet.

Das Verhältnis von wäßriger Phase zu Monomeren enthaltender Phase beträgt zweckmäßig etwa 1,0 bis 2,0. Es sind auch Phasenverhältnisse über 2 möglich, doch verschlechtern diese die Wirtschaftlichkeit des Verfahrens unnötig.

Für die Polymerisation können gegebenenfalls Mischungen von Vinylchlorid mit Monomeren verwendet werden, die mit Vinylchlorid copolymerisierbar sind. Für die Mischung mit Vinylchlorid sind beispielsweise ein oder mehrere folgender Monomerer geeignet: Olefine, wie Ethylen oder Propylen; Vinylester von geradkettigen oder verzweigten Carbonsäuren mit 2 bis 20, vorzugsweise 2 bis 4 Kohlenstoffatomen, wie Vinylacetat, -propionat,-butyrat, -2-ethylhexoat, Vinylisotridecansäureester; Vinylhalogenide, wie Vinylfluorid, Vinylidenfluorid, Vinylidenchlorid; Vinylether; Vinylpyridin; ungesättigte Säuren, wie Malein-, Fumar-, Acryl-, Methacrylsäure und deren Mono- oder Diester mit Mono- oder Dialkoholen mit 1 bis 10 Kohlenstoffatomen; Maleinsäureanhydrid; Maleinsäureimid sowie dessen N-Substitutionsprodukte mit aromatischen, cycloaliphatischen sowie gegebenenfalls verzweigten aliphatischen Substitutionen; Acrylnitril; Styrol.

Entweder Vinylchlorid oder die oben näher beschriebene überwiegend Vinylchlorid enthaltende Monomermischung kann unter Zusatz von Polymeren, die mit Vinylchlorid pfropfpolymerisierbar sind, polymerisiert werden. Hierfür sind beispielsweise geeignet: elastomere Polymerisate, die durch Polymerisation von einem oder mehreren folgender Monomerer erhalten wurden: Diene, wie Butadien, Cyclopentadien; Olefine, wie Ethylen, Propylen; Styrol; ungesättigte Säuren, wie Acryl- oder Methacrylsäure sowie deren Ester mit Mono- oder Dialkoholen mit 1 bis 10 Kohlenstoffatomen; Acrylnitril; Vinylverbindungen, wie Vinylester von geradkettigen oder verzweigten Carbonsäuren mit 2 bis 20, vorzugsweise 2 bis 4 Kohlenstoffatomen; Vinylhalogenide, wie Vinylidenchlorid, Vinylchlorid, letzteres jedoch nur mit mindestens einem der zuvor genannten Monomeren.

Bei der Polymerisation werden ein oder mehrere monomerlösliche bzw. wasserlösliche, freie Radikale bildende Katalysatoren eingesetzt. Die Gesamtmenge der einzusetzendenkatalysatoren beträgt 0,001 bis 3 Gew.-%, vorzugsweise 0,01 bis 0,3 Gew.-%, bezogen auf eingesetztes Monomeres bzw. eingesetzte Monomere. Als Katalysatoren sind beispielsweise geeignet Diaryl-, Diacylperoxide, wie Diacetyl-, Acetylbenzoyl-, Di-lauroyl-, Dibenzoyl-, Bis-2,4-dichlorbenzoyl-, Bis-2-methylbenzoyl-peroxid; Dialkylperoxide, wie Di-tert.-butylperoxid, Perester, wie tert.-Butylpercarbonat; tert.-Butylperacetat, tert.-Butylperoctoat, tert.-Butylperpivalat, Cumylperneodecanoat; Dialkylperoxy-di-carbonate, wie Diisopropyl-, Diethylhexyl-, Dicyclohexyl-, Diethylcyclohexylperoxy-di-carbonat, Dicetylperoxy-di-carbonat, Bis(4-tert.-butyl)-cyclohexyl-peroxy-di-carbonat; gemischte Anhydride von organischen Sulfopersäuren und organischen Säuren, wie Acetylcyclohexylsulfonylperoxid; außerdem als Polymerisationskatalysatoren bekannte Azoverbindungen, wie Azoisobuttersäurenitril.

Geeignete wasserlösliche Katalysatoren sind beispielsweise Peroxydisulfate, Peroxydiphosphate, Perborate des Kaliums, Natriums oder Ammoniums, Wasserstoffperoxid, tert.-Butylhydroperoxid oder andere wasserlösliche Peroxide sowie auch Mischungen verschiedener Katalysatoren, wobei diese Katalysatoren auch in Gegenwart von 0,001 bis 1 Gew.-%, bezogen auf Monomere, einer oder mehrerer reduzierender Substanzen, die zum Aufbau eines Redox-Katalysatorsystems geeignet sind, wie z. B. Sulfite, Bisulfite, Dithionite, Thiosulfate, Aldehyd-sulfoxylate, z. B. Natriumformaldehyd-sulfoxylat, eingesetzt werden können. Gegebenenfalls kann die Polymerisation in Gegenwart von 0,05 bis 10 ppm, bezogen auf Metall pro Monomere, von löslichen Metallsalzen, beispielsweise des Kupfers, Silbers, Eisens, Nickels, Kobalts oder Chroms, vorgenommen werden.

Ferner kann die Polymerisation, falls sie nach dem Suspensionsverfahren durchgeführt wird, in Gegenwart von 0,01 bis 1 Gew.-%, vorzugsweise 0,05 bis 0,3 Gew.-%, bezogen auf Monomere, von einem (oder mehreren) Schutzkolloid(en), wie beispielsweise Polyvinylalkohol, der gegebenenfalls noch bis zu 40 Mol-% Acetylgruppen enthält, Cellulosederivaten, wie wasserlösliche Methylcellulose, Carboxymethylcellulose, Hydroxyethylcellulose, Methylhydroxypropylcellulose, sowie Gelatine, Leim, Dextran, ferner Mischpolymerisaten von Maleinsäure bzw. deren Halbestern und Styrolen, stattfinden.

Außerdem kann die Polymerisation in Gegenwart von 0,01 bis 5 Gew.-%, bezogen auf Monomere, von einem oder mehreren Emulgatoren durchgeführt werden, wobei die Emulgatoren auch in Mischung mit den obengenannten Schutzkolloiden eingesetzt werden können. Als Emulgatoren können anionische, amphotere, kationische sowie nicht— ionogene verwendet werden. Als anionische Emulgatoren sind beispielsweise geeignet: Alkali-, Erdalkali-, Ammoniumsalze von Fettsäuren, wie Laurin-, Palmitin-, oder Stearinsäure; von sauren Fettalkoholschwefelsäureestern; von Paraffinsulfonsäuren; von Alkylarylsulfonsäuren, wie Dodecylbenzol- oder Dibutylnaphthalinsulfonsäure, von Sulfobernsteinsäuredialkylestern, sowie die Alkali- und Ammoniumsalze von epoxygruppenhaltigen Fettsäuren, wie Epoxystearinsäure; von Umsetzungsprodukten von Persäuren, z. B. Peressigsäure mit gesättigten Fettsäuren wie Ölsäure. Als amphotere bzw. kationenaktive Emulgatoren sind beispielsweise geeignet: Alkylbetaine, wie Dodecylbetain, sowie Alkylpyridiniumsalze, wie Laurylpyridiniumhydrochlorid; ferner Alkylammoniumsalze, wie Oxethyldodecylammoniumchlorid. Als nichtionogene Emulgatoren kommen beispielsweise in Frage: Teilfettsäureester mehrwertiger Alkohole, wie Glycerinmonostearat, Sorbitmonolaurat, -oleat oder -palmitat; Polyoxyethylenether von Fettalkoholen oder aromatischen Hydroxyverbindungen; Polyoxyethylenester von Fettsäuren sowie Polypropylenoxid-Polyethylenoxid-Kondensationsprodukten.

Neben Katalysatoren, gegebenenfalls Schutzkolloiden und/ oder Emulgatoren kann die Polymerisation in Gegenwart von Puffersubstanzen, wie beispielsweise Alkaliacetaten, Borax, Alkaliphosphaten, Alkalicarbonaten, Ammoniak oder Ammoniumsalzen von Carbonsäuren sowie von Molekülgrößen-reglern, wie beispielsweise

aliphatischen Aldehyden mit 2 bis 4 Kohlenstoffatomen, Chlor- oder Bromkohlenwasserstoffen, wie z. B. Di- und Tri-chlorethylen, Chloroform, Bromoform, Methylenchlorid, sowie Mercaptanen durchgeführt werden.

Weitere geeignete Polymerisationshilfsstoffe sind zum Beispiel beschrieben in dem Buch "Polyvinylchlorid und Vinylchlorid-Mischpolymerisate" von H. Kainer, Springer-Verlag Berlin/Heidelberg/New York, 1565, Seiten 15 bis 59. Der pH-Wert der Polymerisations-Mischung kann 3 bis 10 betragen.

Wie eingangs bereits erwähnt, ermöglicht es das erfindungsgemäße Verfahren, radikalische Polymerisationen in wäßriger Dispersion, insbesondere zur Herstellung von Vinylchlorid-Polymerisaten, durchzuführen, wobei wesentlich weniger Wandbelagsbildung auftritt als nach bekannten Verfahren gemäß dem Stande der Technik. Dadurch werden Rüstzeiten gespart, Schwierigkeiten durch Verunreinigung des erzeugten Polymeren mit Grobanteilen vermieden und die Konstanz des Wärmeübergangs von der Polymerisationsmischung auf die Kesselwand auch während längerer Polymerisationszeiten aufrechterhalten, wodurch eine Steigerung der Produktivität möglich ist. Eine Verunreinigung des erzeugten Polymeren durch physiologisch bedenkliche Substanzen tritt nicht auf.

Nachfolgende Beispiele sollen die Erfindung näher erläutern:

**Beispiele 1, 3, 6 bis 10 und 14 bis 26**

Herstellung der erfindungsgemäßen Reaktionsprodukte von Verbindungen a) mit Inhibitoren b)

20 mmol einer Verbindung a), wie aus nachfolgender Tabelle ersichtlich, werden in 200 ml wasserfreiem Aceton gelöst. Zu dieser Lösung werden in einer trockenen Stickstoff-Atmosphäre eine Lösung von 20 mmol eines Inhibitors b), wie aus nachfolgender Tabelle ersichtlich, in 200 ml Aceton während 60 Minuten unter Rühren zugetropft, wobei die Temperatur der Mischung auf dem aus der Tabelle ersichtlichen Wert gehalten wird. Nach Beendigung der Gasentwicklung wird weitergerührt, bis die aus der Tabelle ersichtliche Gesamt-Reaktionszeit erreicht ist, dann bei 50 °C unter schwach vermindertem Druck das Aceton abdestilliert und anschließend 2 Stunden bei 50 °C und 1 kPa Druck behandelt, um etwa vorhandene, nicht-umgesetzte Verbindung a) zu entfernen. Es wird ein kristallines Pulver erhalten, von dem 5 g in 500 ml Aceton (das sind 79 Gew.-Teile Aceton je Gew.-Teil des Reaktionsproduktes aus der Verbindung a mit dem Inhibitor b) gelöst werden. Zu dieser Lösung werden 500 ml Wasser (das sind 100 Gew.-Teile Wasser je Gew.-Teil des Reaktionsproduktes aus a + b) gegeben, die Mischung bei der aus der Tabelle ersichtlichen Zeit und Temperatur gerührt und nun wie nachfolgend beschrieben zur Beschichtung verwendet.

**Beispiele 2 und 4**

Es wird verfahren, wie bei Beispiel 1 beschrieben, jedoch werden den 500 ml Wasser 1 g Ameisensäure (das sind 0,11 Gew.-%, bezogen auf die Mischung Wasser + Lösungsmittel + Reaktionsprodukt aus a und b) zugesetzt.

**Beispiele 5 und 27**

Es wird verfahren, wie bei Beispiel 1 beschrieben, jedoch werden den 500 ml Wasser 0,3 g konzentrierte Salzsäure mit 30 Gew.-% HCl (das sind 0,01 Gew.-% HCl, bezogen auf die Mischung Wasser + Lösungsmittel + Reaktionsprodukt aus a und b) zugesetzt.

**Beispiele 11 bis 13**

Es wird verfahren, wie in Beispiel 1 beschrieben, jedoch werden 5 g des Reaktionsproduktes aus a und b in 2500 ml Aceton (das sind 395 Gew.-Teile auf 1 Gew.-Teil des Reaktionsproduktes aus a und b) gelöst und hierzu 2500 ml (das sind 500 Gew.-Teile auf 1 Gew.-Teil des Reaktionsproduktes aus a und b) gegeben.

**Vergleichsversuche A, E und G**

Diese Versuche dienen als Blindprobe, es wird keine Beschichtungslösung verwendet.

## TABELLE

| Vergleich bzw. Beispiel Nr. | Verbindung a) | Inhibitor b) | mol a) je g Atom H von b) | Reaktions-Temp. °C | Reaktions-Dauer (min) | Gew.-Teil aprot. Lösungsmittel je Gew.-Teil b) | Hydrolyse-Temp. °C | Hydrolyse-Dauer (min) | Auftragsart | Gew.-% (a+b) in Auftragslösung | Wärmebehandlung Temp. °C | Wärmebehandlung Dauer (min) | Auftragsstärke g/m² | Polym.-Art | Polym.-Temp. °C | Zahl der Ansätze | Belagsmenge (mg) | rel. Belag Blindprobe = 100 % | Bemerkungen |
|---|---|---|---|---|---|---|---|---|---|---|---|---|---|---|---|---|---|---|---|
| A | - | - | - | - | - | - | - | - | - | - | - | - | - | S | 53 | 1 | 120 | 100 | a) |
| B | $CH_3SiCl_3$ | - | - | - | - | - | 20 | 30 | Sprühen | 0,56 | 135 | 60 | 0,51 | S | 53 | 1 | 88 | 73 | - |
| C | $Si(OC_2H_5)_4$ | - | - | - | - | - | 50 | 120 1) | Sprühen | 0,56 | 135 | 60 | 0,50 | S | 53 | 1 | 116 | 97 | - |
| D | - | α) | - | - | - | - | - | - | Pinseln | 0,5 | 20 | - | 0,21 | S | 53 | 1 | 23 | 19 | b) |
| 1 | $SiCl_4$ | α) | 0,5 | 20 | 120 | 55 | 20 | 30 | Sprühen | 0,56 | 135 | 60 | 0,54 | S | 53 | 1 | <3 | <2 | - |
| 2 | $Si(OC_2H_5)_4$ | α) | 0,5 | 40 | 180 | 55 | 50 | 120 1) | Sprühen | 0,56 | 135 | 60 | 0,51 | S | 53 | 1 | 15 | 12 | - |
| E | - | - | - | - | - | - | - | - | - | - | - | - | - | S | 66 | 1 | 220 | 100 | a) |
| F | - | α) | - | - | - | - | - | - | Pinseln 3x | 0,5 | 20 | - | 0,22 | S | 66 | 1 | 33 | 15 | b) |
| 3 | $SiCl_4$ | α) | 0,5 | 20 | 120 | 55 | 20 | 30 | Sprühen | 0,56 | 135 | 60 | 0,57 | S | 66 | 1 | 10 | 4,5 | - |
| G | - | - | - | - | - | - | - | - | - | - | - | - | - | S | 66 | 3 | 556 | 100 | a) |
| H | - | α) | - | - | - | - | - | - | Sprühen | 0,5 | 135 | 60 | 0,40 | S | 66 | 3 | 163 | 29 | b) |
| I | $Si(OCH_3)_4$ | - | - | - | - | - | 50 | 120 1) | Sprühen | 0,56 | 135 | 60 | 0,52 | S | 66 | 3 | 597 | 107 | - |
| K | $Si(OC_2H_5)_4$ | - | - | - | - | - | 50 | 120 1) | Sprühen | 0,56 | 135 | 60 | 0,51 | S | 66 | 3 | 588 | 105 | - |
| L | $CH_3SiCl_3$ | - | - | - | - | - | 20 | 30 | Sprühen | 0,56 | 135 | 60 | 0,53 | S | 66 | 3 | 575 | 103 | - |
| N | $SiCl_4$ | - | - | - | - | - | 20 | 30 | Sprühen | 0,56 | 135 | 60 | 0,56 | S | 66 | 3 | 463 | 83 | - |
| 4 | $Si(OC_2H_5)_4$ | α) | 0,5 | 40 | 180 | 55 | 50 | 120 1) | Sprühen | 0,56 | 135 | 60 | 0,51 | S | 66 | 3 | 119 | 21 | - |
| 5 | $CH_3Si(OC_2H_5)_3$ | α) | 0,5 | 40 | 180 | 55 | 50 | 120 2) | Sprühen | 0,56 | 135 | 60 | 0,56 | S | 66 | 3 | 100 | 18 | - |

**TABELLE** (Fortsetzung)

| Vergleich bzw. Beispiel Nr. | Verbindung a) | Inhibitor b) | mol a) je g Atom H von b) | Reaktions-Temp. °C | Reaktions-Dauer (min) | Gew.-Teil aprot. Lösungsmittel je Gew.-Teil b) | Hydrolyse-Temp. °C | Hydrolyse-Dauer (min) | Auftragsart | Gew.-% (a+b) in Auftragslösung | Wärmebehandlung Temp. °C | Wärmebehandlung Dauer (min) | Auftragsstärke $g/m^2$ | Polym.-Art | Polym.-Temp. °C | Zahl der Ansätze | Belagsmenge (mg) | rel. Belag Blindprobe = 100 % | Bemerkungen |
|---|---|---|---|---|---|---|---|---|---|---|---|---|---|---|---|---|---|---|---|
| 6 | $CH_3Si(OCOCH_3)_3$ | α) | 0,5 | 20 | 120 | 55 | 20 | 60 | Sprühen | 0,56 | 135 | 60 | 0,52 | S | 66 | 3 | 127 | 23 | - |
| 7 | $CH_2$=$CHSi(OCOCH_3)_3$ | α) | 0,5 | 20 | 120 | 55 | 20 | 60 | Sprühen | 0,56 | 135 | 60 | 0,53 | S | 66 | 3 | 131 | 24 | - |
| 8 | $CH_3SiCl_3$ | α) | 0,5 | 20 | 120 | 55 | 20 | 30 | Sprühen | 0,56 | 135 | 60 | 0,53 | S | 66 | 3 | < 10 | <1 | - |
| 9 | $SiCl_4$ | α) | 0,5 | 20 | 120 | 55 | 20 | 30 | Sprühen2x | 0,56 | 135 | 60 | 1,01 | S | 66 | 3 | < 10 | <1 | - |
| 10 | $CH_2$=$CHSiCl_3$ | α) | 0,5 | 20 | 120 | 55 | 20 | 30 | Sprühen | 0,56 | 135 | 60 | 0,51 | S | 66 | 3 | 98 | 17 | - |
| 11 | $SiCl_4$ | α) | 0,5 | 20 | 120 | 55 | 20 | 30 | Sprühen | 0,11 | 135 | 60 | 0,17 | S | 66 | 3 | 49 | 9 | - |
| 12 | $SiCl_4$ | α) | 0,5 | 20 | 120 | 55 | 20 | 30 | Tauchen1x | 0,11 | 135 | 60 | 0,03 | S | 66 | 3 | 60 | 11 | - |
| 13 | $SiCl_4$ | α) | 0,5 | 20 | 120 | 55 | 20 | 30 | Pinseln3x | 0,11 | 135 | 60 | 0,07 | S | 66 | 3 | 71 | 13 | - |
| 14 | $SiCl_4$ | α) | 0,5 | 20 | 120 | 55 | 20 | 30 | Sprühen | 0,56 | 80 | 60 | 0,54 | S | 66 | 3 | 20 | 3 | - |
| 15 | $SiCl_4$ | α) | 0,5 | 20 | 120 | 55 | 20 | 30 | Sprühen | 0,56 | 180 | 60 | 0,50 | S | 66 | 3 | < 10 | < 1 | - |
| N | - | β) | - | - | - | - | - | - | Pinseln3x | 0,5 | 135 | 60 | 0,20 | S | 66 | 3 | 147 | 26 | c) |
| 16 | $SiCl_4$ | β) | 0,5 | 20 | 120 | 55 | 20 | 30 | Sprühen | 0,56 | 135 | 60 | 0,51 | S | 66 | 3 | 53 | 9 | - |
| 17 | $SiCl_4$ | γ) | 0,5 | 20 | 120 | 143 | 20 | 30 | Sprühen | 0,56 | 135 | 60 | 0,51 | S | 66 | 3 | 212 | 37 | - |
| 18 | $SiCl_4$ | δ) | 0,5 | 20 | 120 | 69 | 20 | 30 | Sprühen | 0,56 | 135 | 60 | 0,53 | S | 66 | 3 | 102 | 18 | - |
| 19 | $SiCl_4$ | ε) | 0,25 | 20 | 120 | 146 | 20 | 30 | Sprühen | 0,56 | 135 | 60 | 0,55 | S | 66 | 3 | 85 | 15 | - |
| 20 | $SiCl_4$ | ζ) | 0,5 | 20 | 120 | 27 | 20 | 30 | Sprühen | 0,56 | 135 | 60 | 0,51 | S | 66 | 3 | 50 | 9 | - |

**TABELLE** (Fortsetzung)

| Vergleich bzw. Beispiel Nr. | Verbindung a) | Inhibitor b) | mol a) je g Atom H von b) | Reaktions-Temp. °C | Reaktions-Dauer (min) | Gew.-Teil aprot. Lösungsmittel je Gew.-Teil b) | Hydrolyse-Temp. °C | Hydrolyse-Dauer (min) | Auftragsart | Gew.-% (a+b) in Auftragslösung | Wärmebehandlung Temp. °C | Wärmebehandlung Dauer (min) | Auftragsstärke g/m² | Polym.-Art | Polym.-Temp. °C | Zahl der Ansätze | Belagsmenge (mg) | rel. Belag Blindprobe = 100 % | Bemerkungen |
|---|---|---|---|---|---|---|---|---|---|---|---|---|---|---|---|---|---|---|---|
| 21 | $SiCl_4$ | η) | 0,5 | 20 | 120 | 25 | 20 | 30 | Sprühen | 0,56 | 135 | 60 | 0,50 | S | 66 | 3 | 57 | 10 | - |
| 22 | $SiCl_4$ | ϑ) | 0,5 | 20 | 120 | 25 | 20 | 30 | Sprühen | 0,56 | 135 | 60 | 0,55 | S | 66 | 3 | 45 | 8 | - |
| 23 | $SiCl_4$ | ι) | 0,5 | 20 | 120 | 20 | 20 | 30 | Sprühen | 0,56 | 135 | 60 | 0,53 | S | 66 | 3 | 63 | 11 | - |
| 24 | $SiCl_4$ | κ) | 0,5 | 20 | 120 | 25 | 20 | 30 | Sprühen | 0,56 | 135 | 60 | 0,57 | S | 66 | 3 | 51 | 9 | - |
| 25 | $SiCl_4$ | λ) | 0,5 | 20 | 120 | 22 | 20 | 30 | Sprühen | 0,56 | 135 | 60 | 0,60 | S | 66 | 3 | 47 | 8 | - |
| 26 | $SiCl_4$ | μ) | 0,5 | 20 | 120 | 25 | 20 | 30 | Sprühen | 0,56 | 135 | 60 | 0,50 | S | 66 | 3 | 58 | 10 | - |
| 27 | $CH_3Si(OC_2H_5)_3$ | ζ) | 0,5 | 40 | 180 | 55 | 50 | 120 2) | Sprühen | 0,56 | 135 | 60 | 0,56 | S | 66 | 3 | 107 | 19 | - |
| 0 | Siliconharz | ν) | - | - | - | - | - | - | Sprühen | 0,56 | 60 | 120 | 0,57 | S | 66 | 3 | 185 | 33 | d) |

Fußnoten siehe nächste Seite

Fußnoten zur Tabelle:
1) = 1 g Ameisensäure auf 900 g Lösung a + b in $H_2O$/Aceton
2) = 0,3 g konzentrierte Salzsäure (= 0,09 g HCl) auf 900 g Lösung a + b in $H_2O$/Aceton

**Bemerkunngen**

a) = Blindprobe
b) = nach DE-OS 29 19 258
c) = nach DE-OS 29 19 197
d) = analog DD-PS 118 287

**Inhibitor b)**

α) =

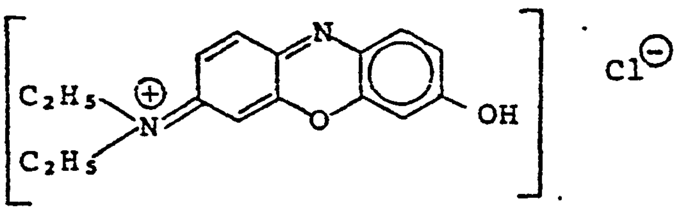

β) =

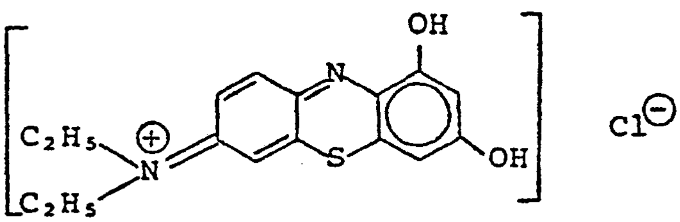

γ) =

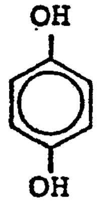

δ) =

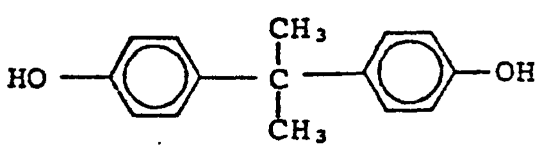

ε) = 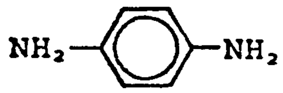

ζ) = 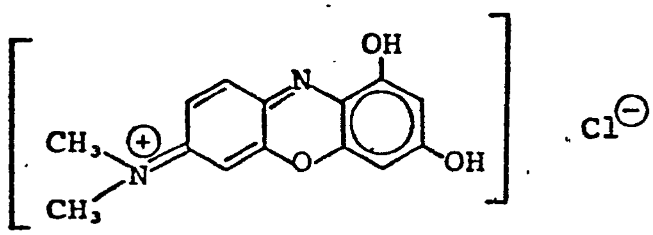

η) = 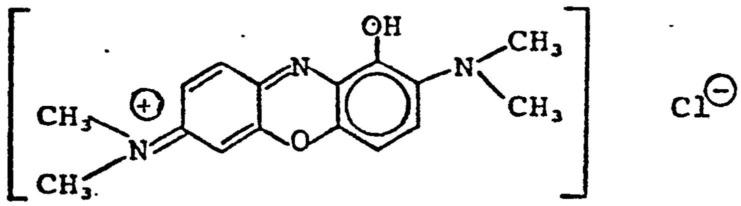

ϑ) = 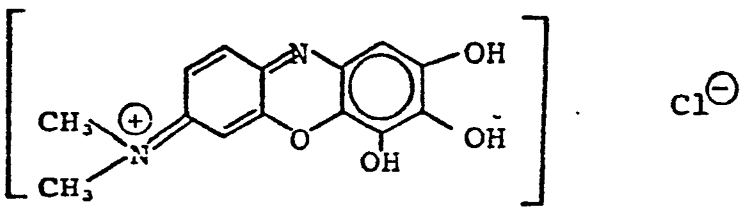

ι) = 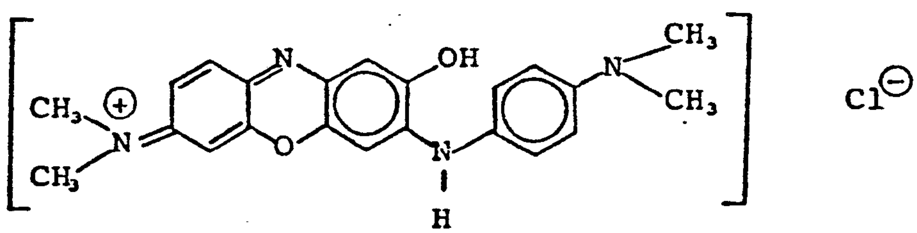

κ) = 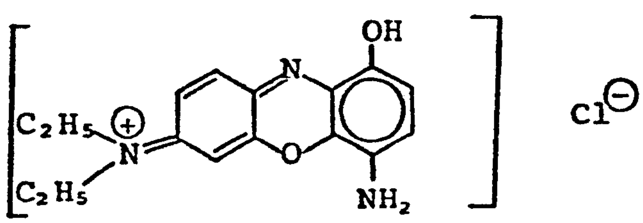

λ) = 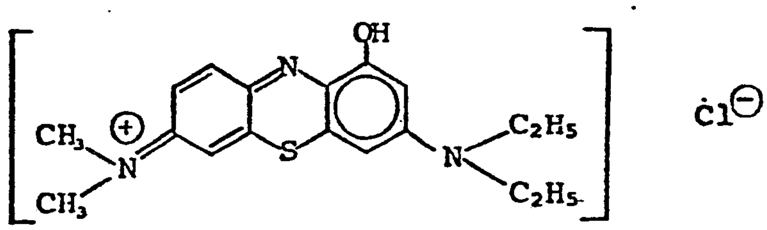

μ) = 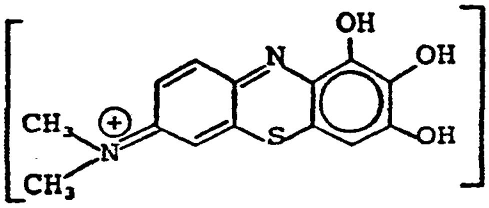 $Cl^{\ominus}$

ν) = 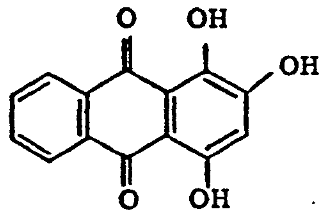

**Vergleichsversuch P (Blindprobe)**

Ein Reaktor aus $V_4A$-Stahl, der einen Blattrührer und einen Doppelmantel enthält, wird innen sorgfältig von oberflächlich anhaftenden Verunreinigungen gesäubert, dann mit 100 Gew.-Teilen entsalztem Wasser, das 1,4 Gew.-Teile eines Gemisches aus Paraffinsulfonsäuren der Kettenlängen $C_{14}$ - $C_{16}$, 0,05 Gew.-Teile Dinatriumhydrogenphosphat und 0,2 Gew.-Teile Kaliumpersulfat gelöst enthält, gefüllt. Die wäßrige Lösung wird mit Ammoniakwasser auf pH 9,5 eingestellt, die Luft aus dem Reaktor mit trockenem Stickstoff verdrängt, unter Druck werden 75 Gew.-Teile Vinylchlorid eingespeist und durch Rühren in der wäßrigen Flotte emulgiert. Nun wird unter Rühren auf 54 °C erwärmt und bei dieser Temperatur gehalten bis 90 Gew.-% des eingesetzten Vinylchlorids polymerisiert sind. Dann wird der Reaktor gekühlt, entspannt, entleert und mit Wasser gespült.

An den Wänden hat sich ein Polymerbelag gebildet, der entfernt, getrocknet und gewogen wird. Es werden 1170 g Belag ermittelt.

**Vergleichsversuch Q**

Es wird verfahren, wie bei Vergleichsversuch P beschrieben, mit dem Unterschied, daß die gesäuberte, trockene Innenwand des Reaktors vor dem Befüllen auf 60 °C erwärmt und durch Besprühen mit 2000 ml einer Wasser-Aceton-Lösung,deren Herstellung unter Vergleichsversuch C beschrieben ist, beschichtet und anschließend während 1 Stunde bei 135 °C behandelt wird. Nach Abkühlung wird der Reaktor wie angegeben befüllt und polymerisiert. Nach Beendigung der Polymerisation werden 923 g Belag ermittelt.

**Beispiel 20**

Es wird verfahren, wie bei Vergleichsversuch Q beschrieben, mit dem Unterschied, daß für die Beschichtung der Reaktor-Innenwand anstelle der in Vergleichsversuch C beschriebenen die in Beispiel 3 beschriebene Wasser-Aceton-Lösung verwendet wird.

Nach Beendigung der Polymerisation werden 85 g Belag ermittelt.

**Patentansprüche**

1. Verfahren zur Herstellung von Vinylchlorid-Homo-, -Co- oder -Pfropfpolymerisaten, die mindestens 50 Gew.-%, bezogen auf das Polymere, polymerisierte Vinylchlorideinheiten enthalten, durch Polymerisation von Vinylchlorid, gegebenenfalls in Mischung mit Monomeren, die mit Vinylchlorid copolymerisierbar sind, und/oder Polymeren, die mit Vinylchlorid pfropfpolymerisierbar sind, in wäßriger Dispersion in Gegenwart von radikalbildenden Katalysatoren, gegebenenfalls Suspensionsstabilisatoren, Emulgatoren und Polymerisationshilfsstoffen in einer Apparatur, deren Oberflächen, die mit der Polymerisationsmischung oder nur mit den Monomeren in Berührung kommen können, mit einem Überzug versehen sind, dadurch gekennzeichnet, daß dieser Überzug ganz oder teilweise aus einem Reaktionsprodukt besteht, das erhalten wird bei -20 bis + 200 °C, in Gegenwart oder Abwesenheit eines aprotischen Lösungsmittels durch Umsetzung von
a) mindestens einer Verbindung der allgemeinen Formel

$$R^I_n-Si-Z_{(4-n)} \qquad (I),$$

worin bedeuten
$R^I$ = einen Kohlenwasserstoffrest mit 1 bis 6 C-Atomen, der gegebenenfalls einen oder mehrere der folgenden Substituenten trägt: F, Cl, Br, -SH, $NH_2$ und/oder, wenn mehr als 1 oder 2 C-Atome vorhanden sind, in dessen Kohlenstoffkette Heteroatome wie folgt eingebaut sein können:

(C)-O-(C); 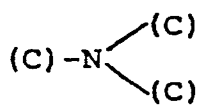 ;

mit der Maßgabe, daß der Rest $R^I$ keine -SH- oder -$NH_2$-Gruppen enthält, wenn Z = Cl und/ oder Br ist,
Z = Cl; Br; -O-$R_1$, wobei $R_1$ einen Alkylrest mit 1 bis 4 C-Atomen bedeutet; -$OCOR_2$, wobei $R_2$ die Bedeutung von $R_1$ hat;
n = 0 oder 1, wobei Z gleich oder verschieden sein kann, und
b) mindestens einem Inhibitor für radikalisch verlaufende Polymerisationen, der im Molekül mindestens einen aromatischen Ring oder mindestens einen chinoiden Ring und mindestens ein Wasserstoffatom enthält, das mit einem Sauerstoff-, Schwefel- oder Stickstoffatom verbunden ist, dann Abtrennung der überschüssigen Verbindung a) und gegebenenfalls des Lösungsmittels, anschließend Umsetzung des Reaktionsproduktes aus den genannten Verbindungen a) und b) mit Wasser bei 10 bis 100 °C, gegebenenfalls unter erhöhtem Druck, in Gegenwart oder Abwesenheit eines mit Wasser wenigstens teilweise mischbaren Lösungsmittels und/oder eines für die Hydrolyse von Siliciumverbindungen bekannten Katalysators, und nachfolgend Behandlung des Hydrolyseproduktes bei 40 bis 200 °C, in Gegenwart oder Abwesenheit eines für die Vernetzung hydrolisierter Siliciumverbindungen bekannten Katalysators.

2. Verfahren nach Anspruch 1, dadurch gekennzeichnet, daß je g-Atom Wasserstoff, der mit einem Sauerstoff-, Schwefel- oder Stickstoffatom im Inhibitor b) verbunden ist, 0,25 bis 2 mol der Verbindung a) umgesetzt werden.

3. Verfahren nach einem der Ansprüche 1 oder 2, dadurch gekennzeichnet, daß die Reaktion der Verbindung a) mit dem Inhibitor b) bei 10 bis 100 °C durchgeführt wird.

4. Verfahren nach einem der Ansprüche 1, 2 oder 3, dadurch gekennzeichnet, daß mindestens eine Verbindung a) mit der Formel (I) eingesetzt wird, in der bedeuten:

$R^I_n$ = einen Kohlenwasserstoffrest mit 1 bis 6 C-Atomen,
Z = Cl oder Br, und
n = 0 oder 1.

5. Verfahren nach einem der Ansprüche 1, 2, 3 oder 4, dadurch gekennzeichnet, daß der Inhibitor b) eine Verbindung folgender allgemeiner Formel ist

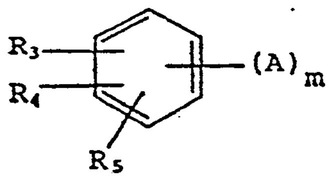

(II) ,

in der

entweder $R_3$, $R_4$, $R_5$ bedeuten: H; oder -O-$R_6$, worin $R_6$ ein Alkylrest mit 1 bis 4 C-Atomen ist, oder einen Alkylrest mit 1 bis 4 C-Atomen oder einen Benzylrest, der gegebenenfalls einen oder mehrere -OH-, $R_6$-, oder -O-$R_6$-Substituenten trägt, wobei die Reste $R_3$, $R_4$ und $R_5$ gleich oder voneinander verschieden sein können;

oder $R_3$ hat die oben angegebene Bedeutung und $R_4$ und $R_5$ haben die Bedeutung

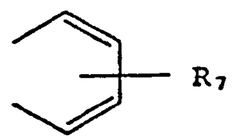

,

worin $R_7$ = H; -OH; -$R_6$; -$OR_6$ bedeuten, worin $R_6$ ein Alkylrest mit 1 bis 4 C-Atomen ist,

A bedeutet -OH oder -$NHR_8$, worin $R_8$ = H oder -$COCH_3$ oder ein Alkylrest mit 1 bis 4 C-Atomen oder ein Phenylrest ist, und in der

m die Zahl 2 oder 3 bedeutet.

6. Verfahren nach einem der Ansprüche 1, 2, 3 oder 4, dadurch gekennzeichnet, daß der Inhibitor b) eine Verbindung folgender allgemeiner Formel ist

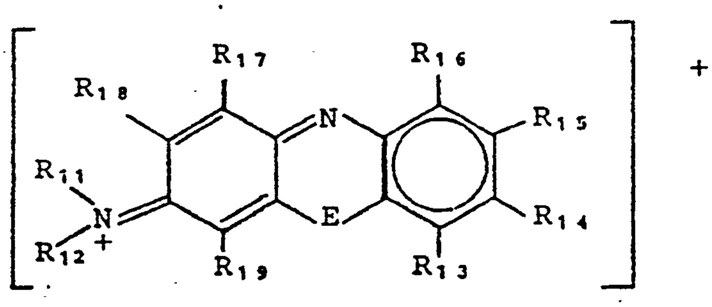

$X^-$ (III) ,

in der die einzelnen Substituenten folgendes bedeuten:

E = O oder S,

$R_{11}$, $R_{12}$ = H; gesättigter Kohlenwasserstoffrest mit 1 bis 8 C-Atomen,

$R_{13}$,$R_{14}$,$R_{15}$,$R_{16}$ = H; gesättigter Kohlenwasserstoffrest mit 1 bis 8 C-Atomen, OH; O — gesättigter Kohlenwasserstoffrest mit 1 bis 8 C-Atomen:

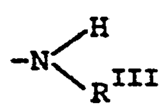

;

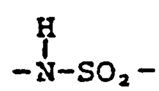

Aromat mit 6 bis 10 C-Atomen, gegebenenfalls substituiert mit Resten wie $R_{11}$/$R_{12}$; oder

$R_{15}$ und $R_{16}$ = Aromat mit 6 bis 10 C-Atomen, gegebenenfalls substituiert mit Resten wie $R_{11}$/$R_{12}$, wobei jedoch mindestens einer der Reste $R_{13}$ bis $R_{16}$ OH oder

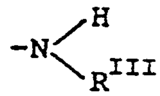

darstellt;
$R^{III}$ = $R_{11}/R_{12}$ oder Aromat mit 6 bis 10 Kohlenstoffatomen, gegebenenfalls substituiert du'ch eine oder mehrere der nachfolgenden Gruppen, entsprechend $R_{11}/R_{12}$, oder O-gesättigter Kohlenwasserstoffrest mit 1 bis 8 C-Atomen oder einer der folgenden Reste: -OH, -COOH,

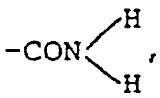 , $-SO_3H$;

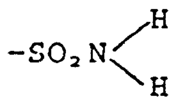 , 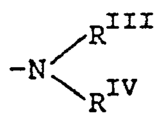 ($R^{III}$, $R^{IV}$ = H

oder $C_1$-$C_6$-Alkyl),
$R_{17}$, $R_{18}$, $R_{19}$ = H, gesättigter Kohlenwasserstoffrest mit 1 bis 8 C-Atomen, vorzugsweise aliphatischer Kohlenwasserstoffrest mit 1 bis 6 C-Atomen, O-gesättigter Kohlenwasserstoffrest mit 1 bis 8 C-Atomen, vorzugsweise O-aliphatischer Kohlenwasserstoffrest mit 1 bis 6 C-Atomen;
X = beliebiges einwertiges Anion oder ein entsprechendes Anionäquivalent.

7. Verfahren nach einem der Ansprüche 1, 2, 3, 4, 5 oder 6, dadurch gekennzeichnet, daß die Umsetzung der Verbindung a) mit dem Inhibitor b) in Gegenwart von 2 bis 200 Gew.-Teilen, bezogen auf 1 Gew.-Teil des Inhibitors b), eines oder mehrerer aprotischer Lösungsmittel, die bei 40 bis 200 °C sieden, vorgenommen wird, wobei nach Beendigung der Reaktion das Lösungsmittel gegebenenfalls zusammen mit nicht-umgesetzter Verbindung a) entfernt wird.

8. Verfahren nach einem der Ansprüche 1, 2, 3, 4, 5, 6 oder 7, dadurch gekennzeichnet, daß die Umsetzung des Reaktionsproduktes der Verbindung a) mit dem Inhibitor b) mit Wasser in Gegenwart von 10 bis 1000 Gew.-Teilen, bezogen auf 1 Gew.-Teil des von überschüssiger Verbindung a) und gegebenenfalls aprotischem Lösungsmittel befreiten Reaktionsproduktes aus a) und b), von mindestens einem Lösungsmittel erfolgt, das bei 30 bis 120 °C siedet und bei der gewählten Umsetzungstemperatur mit mindestens 10 Gew.-% Wasser, bezogen auf die Lösungsmittel-Wasser-Mischung, mischbar ist.

9. Verfahren nach einem der Ansprüche 1, 2, 3, 4, 5, 6, 7 oder 8, dadurch gekennzeichnet, daß als Katalysator für die Umsetzung des Reaktionsproduktes der Verbindung a) mit dem Inhibitor b) mit Wasser 0,001 bis 0,3 Gew.-%, bezogen auf das Umsetzungsgemisch, von mindestens einem der folgenden Stoffe verwendet werden: Ameisensäure, Essigsäure, Propionsäure, Salzsäure, Schwefelsäure, Salpetersäure.

10. Verfahren nach einem der Ansprüche 1, 2, 3, 4, 5 6, 7, 8 oder 9, dadurch gekennzeichnet, daß das mit Wasser umgesetzte Reaktionsprodukt der Verbindung a) mit dem Inhibitor b) auf die Oberflächen der Polymerisations-Apparatur, die mit der Polymerisationsmischung oder den Monomeren allein in Berührung kommen können, aufgetragen wird und der so erzeugte Überzug der im Anspruch 1 beschriebenen Behandlung bei 40 bis 200 °C während 0,25 bis 5 Stunden unterworfen wird.

11. Verfahren nach Anspruch 10, dadurch gekennzeichnet, daß der auf die Oberflächen der Polymerisations-Apparatur aufgetragene Überzug nach Entfernung flüchtiger Stoffe aus der aufgetragenen Mischung und nach Behandlung bei 40 bis 200 °C in einer Menge von 0,01 bis 3 g des mit Wasser umgesetzten Reaktionsproduktes aus Verbindung a) und Inhibitor b) je $m^2$ überzogener Fläche vorliegt.

12. Mittel zur Beschichtung der Innenteile von Apparaturen für die Herstellung von Vinylchloridpolymerisaten zur Unterdruckung der Bildung von Wandbelägen, dadurch gekennzeichnet, daß das Mittel mindestens ein Reaktionsprodukt enthält, welches gemäß Anspruch 1 durch Umsetzung von mindestens einer Verbindung a) mit mindestens einem Inhibitor b) hergestellt wurde.

13. Polymerisations-Apparatur zur Herstellung von Vinylchloridpolymerisaten, deren Innenwände und Einbauten mit einem Überzug versehen sind, der ganz oder teilweise aus einem Reaktionsprodukt besteht, das gemäß Anspruch 1 durch Umsetzung von mindestens einer Verbindung a) mit mindestens einem Inhibitor b) hergestellt wurde.

**Claims**

1. A process for preparing vinyl chloride homo-, co- or graftpolymers which contain at least 50 % by weight, relative to the polymer, of polymerised vinyl chloride units, by polymerisation of vinyl chloride, optionally in mixture with monomers which are copolymerisable with vinyl chloride and/ or polymers which are graft-polymerisable with vinyl chloride, in an aqueous dispersion in the presence of free radicalforming catalysts, and optionally in the presence of suspension stabilisers, emulsifiers and polymerisation auxiliaries, in an apparatus those surfaces of which which can come into contact with the polymerisation mixture or only with the monomers have been provided with a coating, characterised in that this coating is wholly or partially composed of a reaction product which is obtained at −20 to +200 °C, in the presence or absence of an aprotic solvent, by reacting

a) at least one compound of the formula

$$R^{I}_{n}-Si-Z_{(4-n)} \qquad (Ia)$$

in which

$R^I$ denotes a hydrocarbon radical having 1 to 6 carbon atoms and carrying none, one or more of the following substituents:

F, Cl, Br, -SH, $NH_2$ and/or, if more than 1 or 2 carbon atoms are present, heteroatoms can be incorporated in its hydrocarbon chain as follows:

(C)-O-(C) ; 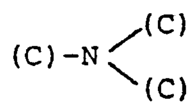 ;

with the proviso that the radical $R^I$ does not contain -SH or $-NH_2$ groups when Z = Cl and/or is Br,

Z denotes Cl, Br, $-O-R_1$, in which $R_1$ denotes an alkyl radical having 1 to 4 carbon atoms or $-OCOR_2$ in which $R_2$ has the meaning of $R_1$,

and

n denotes 0 or 1 and Z can be identical or different, with

b) at least one inhibitor for free-radical polymerisations which contains in the molecule at least one aromatic ring or at least one quinonoid ring and at least one hydrogen atom which is bonded to an oxygen, sulfur or nitrogen atom, then separating off excess compound a) and, if present, the solvent, thereafter reacting the reaction product of the compounds mentioned, namely a) and b), with water at 10 to 100 °C, optionally under elevated pressure in the presence or absence of a solvent which is at least partially miscible with water and/or of a catalyst which is known for the hydrolysis of silicon compounds and then treating the hydrolysis product at 40 to 200 °C, in the presence or absence of a catalyst which is known for the crosslinking of hydrolysed silicon compounds.

2. The process as claimed in claim 1, characterised in that 0.25 to 2 moles of compound a) are reacted per g atom of hydrogen which is bonded to an oxygen, sulfur or nitrogen atom in inhibitor b).

3. The process as claimed in one of claims 1 or 2, characterised in that the reaction of compound a) with inhibitor b) is carried out at 10 to 100 °C.

4. The process as claimed in one of claims 1, 2 or 3, characterised in that at least one compound a) of the formula (I) in which:

$R^I$ = a hydrocarbon radical having 1 to 6 carbon atoms,

Z = Cl or Br, and

n = 0 or 1,

is used.

5. The process as claimed in one of claims 1, 2, 3 or 4, characterised in that inhibitor b) is a compound of the following formula

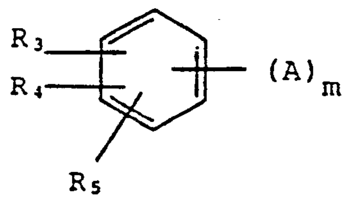

(II)

in which

either $R_3$, $R_4$ and $R_5$ denote

H, or -O-$R_6$ in which $R_6$ is an alkyl radical having 1 to 4 carbon atoms, or an alkyl radical having 1 to 4 carbon atoms, or a benzyl radical which optionally carries one or more -OH, -$R_6$, or -O-$R_6$ sustituents, it being possible for the radicals $R_3$, $R_4$ and $R_5$ to be identical or different from one another;

or $R_3$ has the above-mentioned meaning and

$R_4$ and $R_5$ denote

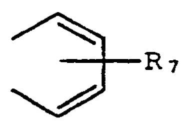
,

in which $R_7$ = H, -OH, -$R_6$ or -O$R_6$ in which $R_6$ is an alkyl radical having 1 to 4 carbon atoms,

A denotes -OH or -NH$R_8$ in which $R_8$ = H or -$COCH_3$ or is an alkyl radical having 1 to 4 carbon atoms or a phenyl radical and in which

m denotes the number 2 or 3.

6 The process as claimed in one of the claims 1, 2, 3 or 4, characterised in that inhibitor b) is a compound of the following formula

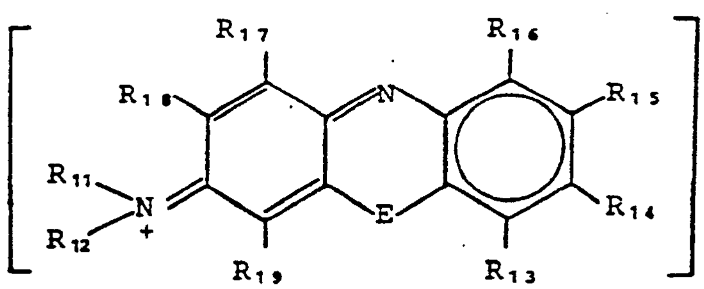

$X^-$ (III),

in which the individual substituents have the following meaning:

E = O or S,

$R_{11}$ and $R_{12}$ = H, or a saturated hydrocarbon radical having 1 to 8 carbon atoms,

$R_{13}$, $R_{14}$, $R_{15}$, and $R_{16}$ = H, a saturated hydrocarbon radical having 1 to 8 carbon atoms, OH, an O-saturated hydrocarbon radical having 1 to 8 carbon atoms;

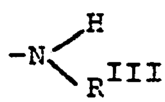
;
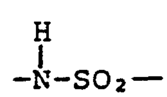

aromatic hydrocarbon having 6 to 10 carbon atoms and optionally substituted by radicals such as $R_{11}$, or

$R_{15}$ and $R_{16}$ = an aromatic hydrocarbon having 6 to 10 carbon atoms and optionally substituted by radicals such as $R_{11}$,

but at least one of the radicals $R_{13}$ to $R_{16}$ represents

OH or

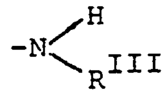

$R^{III}$ = $R_{11}$ or an aromatic hydrocarbon having 6 to 10 carbon atoms and optionally substituted by one or more of the groups below, which correspond to $R_{11}$, or an O-saturated hydrocarbon radical having 1 to 8 carbon atoms or one of the following radicals: -OH, -COOH,

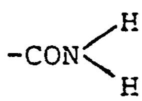 , $-SO_3H$; 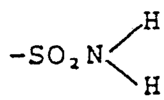 , 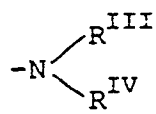

$R^{III}$ and $R^{IV}$ H or $C_1$-$C_6$-alkyl

$R_{17}$, $R_{18}$ and $R_{19}$ = H, a saturated hydrocarbon radical having 1 to 8 carbon atoms, preferably an aliphatic hydrocarbon radical having 1 to 6 carbon atoms, or an O-saturated hydrocarbon radical having 1 to 8 carbon atoms, preferably an O-aliphatic hydrocarbon radical having 1 to 6 carbon atoms, and

X = any monovalent anion or a corresponding anion equivalent.

7. The process as claimed in one of claims 1, 2, 3, 4, 5 or 6, characterised in that the reaction of compound a) with inhibitor b) is carried out in the presence of 2 to 200 parts by weight, relative to 1 part by weight of inhibitor b), of one or more aprotic solvents which boil at 40 to 200°C and after the reaction has ended the solvent is removed together with unconverted compound a) which may be present.

8. The process as claimed in one of claims 1, 2, 3, 4, 5, 6 or 7, characterised in that the reaction of the reaction product of compound a) with inhibitor b) with water is carried out in the presence of 10 to 1,000 parts by weight, relative to 1 part by weight of the reaction product of a) and b) which has been freed from excess compound a) and, if present, aprotic solvent, of at least one solvent which boils at 30 to 120 °C and is miscible at the reaction temperature selected with at least 10 % by weight of water, relative to the solvent/water mixture.

9. The process as claimed in one of claims 1, 2, 3, 4, 5, 6, 7 or 8, characterised in that the catalyst used for the reaction of the reaction product of compound a) with inhibitor b) with water is 0.001 to 0.3 % by weight, relative to the reaction mixture, of at least one of the following materials. formic acid acetic acid propionic acid, hydrochloric acid sulfuric acid, nitric acid.

10. The process as claimed in one of claims 1, 2, 3, 4, 5, 6, 7, 8 or 9, characterised in that the reaction product of compound a) with inhibitor b) is applied after it has been reacted with water to those surfaces of the polymerisation apparatus which can come into contact with the polymerisation mixture or with the monomers alone and the coating thus produced is subjected to the treatment described in claim 1 at 40 to 200 °C for 0.25 to 5 hours.

11. The process as claimed in claim 10, characterised in that the coating applied to the surfaces of the polymerisation apparatus is present in an amount of 0.01 to 3 g of the reaction product of compound a) and inhibitor b) after it has been reacted with water per $m^2$ of coated area after volatile materials have been removed from the applied mixture and after treatment at 40 to 200 °C.

12. An agent for coating the internal parts of an apparatus for preparing vinyl chloride polymers in order to suppress the formation of wall deposits, characterised in that said coating contains at least one reaction product which has been prepared as claimed in claim 1 by reacting at least one compound a) with at least one inhibitor b).

13. A polymerisation apparatus for preparing vinyl chloride polymers, the inside walls and internal fitments of said apparatus have been provided with a coating wholly or partially composed of a reaction product which has been prepared as claimed in claim 1 by reacting at least one compound a) with at least one inhibitor b).

**Revendications**

1. Procédé de préparation d'homopolymères, de copolymères ou de polymères greffés du chlorure de vinyle, qui contiennent aunoins 50 % en poids, par rapport au polymère, de motifs chlorure de vinyle polymérisés par polymérisation de chlorure de vinyle, le cas échéant en mélange avec des monomères qui sont copolymérisables avec le chlorure de vinyle, et/ou de polymères qui peuvent donner lieu à une polymérisation-greffage avec le chlorure de vinyle, en dispersion aqueuse, en présence de catalyseurs radicalaires, le cas échéant de stabilisants

de la suspension, d'émulsionnants et d'adjuvants de polymérisation dans un appareil dont les surfaces qui peuvent venir en contact avec le mélange de polymérisation ou seulement avec les monomères, sont munies d'un revêtement, caractérisé an ce que ce revêtement se compose en tout ou partie d'un produit de réaction qui est obtenu à $-20$ à $+200°C$, en présence ou en l'absence d'un solvant aprotique, par réaction de

a) au moins un composé répondant à la formule générale

$$R^{I}_{n}-Si-Z_{(4-n)}$$

(I)

dans laquelle

$R^I$ = désigne un radical hydrocarboné en C 1 à C 6, qui porte le cas échéant un ou plusieurs des substituants suivants

F, Cl, Br, -SH, NH, et/ou, lorsque plus d' 1 ou 2 atomes de C sont présents, dans la chaîne carbonée duquel des hétéroatomes comme suit peuvent être in; corporés:

(C)-O-(C);

(C)-O-(C); 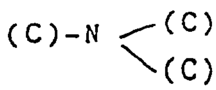 ;

sous réserve que le radical $R^1$ ne contienne pas de groupes -SH- ou -NH,-,lorsque Z = Cl et/ou est Br, Z, Cl; Br; -O-$R_1$, $R_1$ désignant un radical alkyle en C 1 à C 4; -OCOR,, R, ayant la signification de $R_1$; et n, 0 ou 1, Z pouvant être identique ou différent, et

b) au moins un inhibiteur pour des polymérisations radicalaires, qui contient dans sa molécule au moins un cycle aromatique ou au moins un cycle quinonique et au moins un atome d'hydrogène qui est lié à un atome d'oxygène, de soufre ou d'azote, puis séparation du composé a) en excès et le cas échéant du solvant, puis réaction du produit de réaction des composés a) et b) indiqués avec de l'eau à 10 à 100° C, le cas échéant sous pression, en présence ou en l'absence d'un solvant au moins partiellement miscible à l'eau et/ou d'un catalyseur connu pour l'hydrolyse de composés du silicium, puis traitement du produit d'hydrolyse à 40 à 200° C en presence ou en l'absence d'un catalyseur connu pour la réticulation de composés du silicium hydrolysés.

2. Procédé suivant la revendication 1, caractérisé en ce que, pour chaque atome-gramme d'hydrogène qui est lié à un atome d'oxygène, de soufre ou d'azote de l'inhibiteur b), on fait reagir 0,25 à 2 moles du composé a)

3. Procédé suivant l'une des revendications 1 ou 2, caractérisé en ce que la réaction du composé a) avec l'inhibiteur b) est effectués à 10 à 100° C.

4. Procédé suivant l'une des revendications 1, 2 ou 3, caractérisé en ce qu'on utilise au moins un composé a) répondant à la formule I, dans laquelle

$R^{I}_{n}$ = désigne un radical hydrocarboné en C1 à C 6,

Z = Cl ou Br, et

n = 0 ou 1.

5. Procédé suivant l'une des revendications 1, 2, 3 ou 4, caractérisé en ce que l'inhibiteur b) est un composé répondant à la formule générale suivante

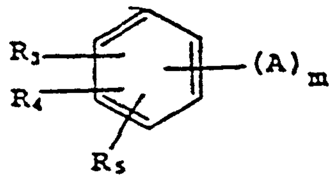

(II)

dans laquelle

soit $R_3$, $R_4$, $R_5$, désignent: H; ou -O-$R_6$, où $R_6$ estun radical alkyle en C1 à C4, ou un radical benzyle, qui porte le cas échéant un ou plusieurs substituants -OH-, $R_6$-, ou -O-$R_6$, les radicaux $R_3$, $R_4$ et $R_5$ pouvant être identiques ou différents;

soit $R_3$ a la signification indiquée ci-dessus et $R_4$ et $R_5$ désignent

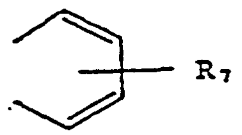

,

où $R_7$, H; -OH; -$R_6$; -O$R_6$, où $R_6$ est un radical alkyle en C 1 à C 4,

A désigne -OH ou -NH$R_8$, où $R_8$, H ou -$COCH_3$, ou un radical alkyle en C 1 à C 4 ou un radical phényle, et où m désigne les nombres 2 ou 3.

6. Procédé suivant l'une des revendications 1, 2, 3 ou 4, caractérisé en ce que l'inhibiteur b) est un composé répondant à la formule générale suivante

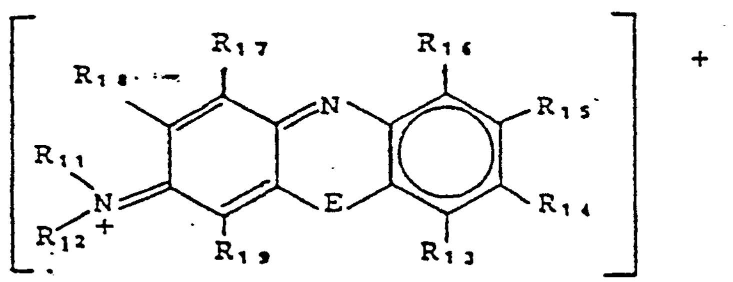

(III),

dans laquelle les divers substituants ont les significations suivantes:

E = O ou S,

$R_{11}$, $R_{12}$ = H; un radical hydrocarboné saturé en C1 à C8,

$R_{13}$, $R_{14}$, $R_{15}$, $R_{16}$ = H; un radical hydrocarboné saturé en C1 à C8, OH; un radical O-hydrocarbure saturé en C1 à C8;

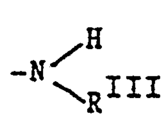 ; 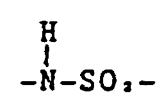

aromatique en C6 à C10 substitué le cas échéant avec des radicaux tels que $R_{11}/R_{12}$; ou

$R_{15}$ et $R_{16}$ désignent un hydrocarbure aromatique en C6 à C 10 substitué le cas échéant avec des radicaux tels que $R_{11}/R_{12}$,

au moins un des radaux $R_{13}$ à $R_{16}$ représentant OH ou

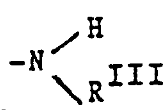 ;

$R^{III}$ = $R_{11}/R_{12}$ ou un hydrocarbure aromatique en C6 à C 10, éventuellement substitué par un ou plusieurs des groupes suivants, correspondant à $R_{11}$-/$R_{12}$, ou par un radical O-hydrocarbure saturé en C 1 à C 8 ou un des

radicaux suivants: -OH, -COOH,

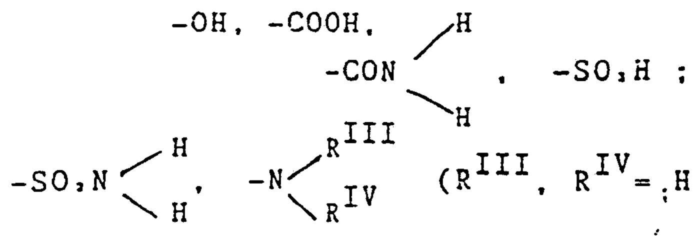

ou un radical alkyle en C 1 à C 6),

$R_{17}$, $R_{18}$, $R_{19}$ désignent H, un radical hydrocarbone saturé en C 1 à C 8, de préférence un radical hydrocarboné aliphatique en C1 à C6, un radical O-hydrocarbure saturé en C1 à C8, de préférence un radical O-hydrocarbure aliphatique en C1 à C6,

X = un anion monovalent quelconque ou un équivalent d'anion correspondant.

7.Procédé suivant l'une des revendications 1, 2, 3, 4, 5 ou 6, caractérisé en ce que la réaction du composé a) avec l'inhibiteur b) est effectuée présence de 2 à 200 parties en poids, pour une partie en poids de l'inhibiteur b), d'un ou plusieurs solvants aprotiques, qui bouent à 40 à 200 ° C, le solvant étant éliminé après la fin de la réaction, le cas échéant en même temps que le composé a) n'ayant pas réagi.

8. Procédé suivant l'une des revendications 1, 2, 3, 4, 5, 6 ou 7, caractérisé en ce que la réaction du produit de réaction du composé a) avec l'inhibiteur b) avec de l'eau s'effectue en présence de 10 à 1000 parties en poids, pour une partie en poids du produit de la réaction de a) et de b) débarrassé du composé a) en excès et éventuellement du solvant aprotique, d'au moins un solvant qui bout à 30 à 120° C et est miscible à la température de réaction choisie avec au moins 10 % en poids d'eau par rapport au mélange solvant-eau.

9. Procédé suivant l'une des revendications 1, 2, 3, 4, 5, 6, 7 ou 8, caractérisé en ce qu'on utilise comme catalyseur pour la réaction du produit de la réaction du composé a) avec l'inhibiteur b) avec de l'eau 0,001 à 0,3 % en poids, par rapport au mélange réactionnel, d'au moins une des substances suivantes:

acide formique, acide acétique, acide propionique, acide chlorydrique, acide sulfurique, acide nitrique.

10. Procédé suivant l'une des revendications 1, 2, 3, 4, 5 6, 7, 8 ou 9, caractérisé en ce que le produit de réaction du composé a) avec l'inhibiteur b) ayant réagi avec de l'eau est appliqué sur les surfaces de l'appareil polymérisation qui peuvent venir en contact avec le mélange de polymérisation ou les monomères seulement, et en ce que le revêtement ainsi produit est soumis au traitement décrit dans la revendication 1 à 40 à 200° C pendant 0, 25 à 5 heures.

11. Procédé suivant la revendication 10, caractérisé en ce que le revêtement appliqué sur les surfaces de l'appareil de polymérisation après élimination de substances volatiles du mélange appliqué et après traitement à 40 à 200° C est présent dans une quantité de 0,01 à 3 g du produit de la réaction du composé a) et de l'inhibiteur b) ayant réagi avec l'eau par m' de surface revêtue.

12. Agent pour l'enduction des parties internes d'appareils pour la préparation de polymères du chlorure de vinyle pour supprimer la formation de dépôts sur les parois, caractérisé en ce que l'agent contient au moins un produit de réaction qui a été préparé conformément à la revendication 1 par réaction d'au moins un composé a) avec au moins un inhibiteur b).

13. Appareil de polymérisation pour la préparation de polymères du chlorure de vinyle, dont les parois internes et les objets qui y sont contenus sont munis d'un revêtement qui se compose en tout ou partie d'un produit de réaction qui a été préparé conformément à la revendication 1 par réaction d'au moins un composé a) avec au moins un inhibiteur b).